# EUROPEAN PATENT APPLICATION

(11) **EP 4 715 439 A1**
(43) Date of publication of application: **25.03.2026**
(21) Application number: 24810924.1
(22) Date of filing: 10.05.2024
(51) Int. Cl.: G02B 7/04, G02B 7/02, G02B 7/08, G03B 17/14

(54) **LENS DEVICE AND LENS DRIVING METHOD**

(30) Priority: 19.05.2023 JP 2023082766
(71) Applicant: Sony Group Corporation, Tokyo 108-0075 (JP)
(72) Inventor: KUGO, Daisuke, Tokyo 108-0075 (JP); TAKEYAMA, Hayato, Tokyo 108-0075 (JP)
(74) Representative: D Young & Co LLP
(86) International application number: PCT/JP2024/017430
(87) International publication number: WO 2024/241916

(57) **Abstract**

A lens device is provided with a first movable coil that moves a first holding frame, and a second movable coil that moves a second holding frame; a drive control unit moves the first movable coil to a first initial position and the second movable coil to a second initial position by simultaneously moving the first movable coil and the second movable coil for a certain period of time in initialization control; and the first initial position and the second initial position are determined on the basis of a first pre-control position, which is a position of the first movable coil relative to a fixed rod before execution of the initialization control, and a second pre-control position, which is a position of the second movable coil relative to the fixed rod before execution of the initialization control.

## Description

### TECHNICAL FIELD

The present technology relates to a technical field of a lens device and a lens driving method in which two or more lenses are individually moved.

### BACKGROUND ART

As an actuator provided in a lens device, there is a linear actuator having a fixed rod in which magnets and yokes are alternately bonded, and a movable coil (for example, refer to Patent Document 1).

### CITATION LIST

### PATENT DOCUMENT

Patent Document 1: WO 2021/153017 A

### SUMMARY OF THE INVENTION

### PROBLEMS TO BE SOLVED BY THE INVENTION

In such a linear actuator, initialization control is required to synchronize an electrical angle in control with a position of the movable coil. In the initialization control, for example, control for moving the movable coil to a predetermined position is performed.

By the way, a lens device is known which is equipped with a lens group adopting a floating mechanism for the purpose of suppressing variation in lens aberration or the like.

In such a lens device, two or more sets of a movable coil and a fixed rod are provided to move two or more movable lens groups.

In a case where two or more movable coils and fixed rods are provided, upsizing of the lens device is caused in order to secure installation space.

Therefore, it is conceivable to provide a common fixed rod for two or more movable coils.

However, in a case where movable ranges of the movable coils overlap, it becomes necessary to control each of the movable coils while avoiding collision of the movable coils.

Furthermore, in the initialization control, since current positions of the movable coils are not grasped, a configuration is adopted in which initialization control for each movable coil is performed in a time-division manner to avoid collision, but a problem arises in that a time required for the initialization control becomes long.

The present technology has been made in view of such problems, and an object thereof is to achieve shortening of a time required for initialization control related to two or more lens groups.

### SOLUTIONS TO PROBLEMS

A lens device according to an aspect of the present technology includes a first lens group including one or more lenses; a first holding frame that holds the first lens group; a second lens group that includes one or more lenses and is positioned closer to an image side than the first lens group; a second holding frame that holds the second lens group; a fixed rod in which two or more magnets and one or more inner yokes are alternately coupled; a movable coil through which the fixed rod is inserted and is movable with respect to the fixed rod in a coupling direction of the magnets and the inner yokes; and a drive control unit that performs initialization control of moving the movable coil to an initial position, in which the movable coil includes a first movable coil that moves the first holding frame, and a second movable coil that moves the second holding frame, the drive control unit moves the first movable coil to a first initial position and the second movable coil to a second initial position by simultaneously moving the first movable coil and the second movable coil for a certain period of time in the initialization control, and the first initial position and the second initial position are determined on the basis of a first pre-control position, which is a position of the first movable coil relative to the fixed rod before execution of the initialization control, and a second pre-control position, which is a position of the second movable coil relative to the fixed rod before execution of the initialization control.

Since the first initial position and the second initial position are determined according to the first pre-control position and the second pre-control position, the initialization control can be performed without considering collision by determining the first initial position and the second initial position such that collision between the first movable coil and the second movable coil does not occur. That is, it is possible to simultaneously drive the first movable coil and the second movable coil for at least a certain period of time in the initialization control.

A lens driving method according to an aspect of the present technology includes causing a lens device to execute initialization control of, with respect to a fixed rod in which two or more magnets and one or more inner yokes are alternately coupled, respectively moving a first holding frame that holds a first lens group including one or more lenses and a second holding frame that holds a second lens group including one or more lenses to initial positions in a coupling direction of the magnets and the inner yokes, in which the initialization control includes processing of moving a first movable coil, through which the fixed rod is inserted and which moves the first holding frame in the coupling direction with respect to the fixed rod, to a first initial position and moving a second movable coil, through which the fixed rod is inserted and which moves the second holding frame in the coupling direction with respect to the fixed rod, to a second initial position, by simultaneously moving the first movable coil and the second movable coil for a certain period of time, and the first initial position and the second initial position are determined on the basis of a first pre-control position, which is a position of the first movable coil relative to the fixed rod before execution of the initialization control, and a second pre-control position, which is a position of the second movable coil relative to the fixed rod before execution of the initialization control.

Even by such a lens driving method, it is possible to simultaneously drive a first movable coil and a second movable coil for at least a certain period of time in the initialization control.

### BRIEF DESCRIPTION OF DRAWINGS

Fig. 1 is a perspective view illustrating an example of an imaging device provided with an interchangeable lens as a lens device of the present technology.
Fig. 2 is a perspective view illustrating an internal structure of the interchangeable lens in a partially cutaway manner.
Fig. 3 is a perspective view illustrating an internal structure of the interchangeable lens with an outer yoke separated in a partially cutaway manner.
Fig. 4 is a sectional view taken along line IV-IV in Fig. 2.
Fig. 5 is a sectional view taken along line V-V in Fig. 2.
Fig. 6 is a front view illustrating an internal structure of the interchangeable lens.
Fig. 7 is a perspective view of a linear actuator.
Fig. 8 is a sectional view of the linear actuator.
Fig. 9 is a conceptual diagram illustrating a generation state of magnetic flux in the linear actuator.
Fig. 10 is another conceptual diagram illustrating a generation state of magnetic flux in the linear actuator.
Fig. 11 is a conceptual diagram illustrating a state of magnetic flux generated from a magnet.
Fig. 12 is a conceptual diagram illustrating respective forces generated in a magnet and an inner yoke.
Fig. 13 is a diagram illustrating a configuration of an imaging device and an interchangeable lens.
Fig. 14 is a diagram illustrating that timings of initialization control of a first lens group and a second lens group overlap.
Fig. 15 is a diagram illustrating an example of a relationship between a pre-control position and an initial position.
Fig. 16 is a diagram illustrating a relationship in an optical axis direction among a fixed rod, an electrical angle, an output of a first sensor, and an output of a second sensor.
Fig. 17 is a diagram illustrating a stop example pattern applied to a movable coil.
Fig. 18 is a diagram illustrating an image-side high-speed movement excitation pattern applied to a movable coil.
Fig. 19 is a diagram illustrating a subject-side high-speed movement excitation pattern applied to a movable coil.
Fig. 20 is a diagram illustrating an example of table information used in the initialization control.
Fig. 21 is a diagram illustrating a control result of a movable coil by the initialization control, and also illustrating a control result for each case.
Fig. 22 is an example of table information in a case where a width of a movable coil in an optical axis direction is taken into consideration.
Fig. 23 is a diagram illustrating an example of a position of a movable coil after the initialization control.
Fig. 24 is a flowchart illustrating an example of the initialization control executed by a lens control unit.

### MODE FOR CARRYING OUT THE INVENTION

Hereinafter, an embodiment will be described in the following order.
<1. Configuration of Imaging Device>
<2. Configuration of Interchangeable Lens>
<3. Relationship between Magnetic Flux and Movable Coil, and the Like>
<4. Functional Configuration of Imaging Device>
<5. Initialization Control>
<6. Processing Flow of Initialization Control>
<7. Summary>
<8. The Present Technology>

In the embodiment described below, an imaging device 100 to which an interchangeable lens 1 to which a lens device of the present technology is applied is attached will be described as an example. Note that an application range of the present technology is not limited to the interchangeable lens, and the present technology is applicable to various lens devices provided with a lens.

In the following description, directions of front, rear, up, down, left, and right are indicated with respect to a direction viewed from a photographer at the time of imaging by the imaging device 100. Accordingly, a subject side (object side) becomes a front side, and an image plane side (image side) becomes a rear side. Note that the directions of front, rear, up, down, left, and right mentioned below are adopted for ease of explanation, and embodiments of the present technology are not limited by these directions.

Furthermore, the lens group described below may include one lens or two or more lenses, and other optical elements such as a diaphragm and an iris in addition to one lens or two or more lenses.

### <1. Configuration of Imaging Device>

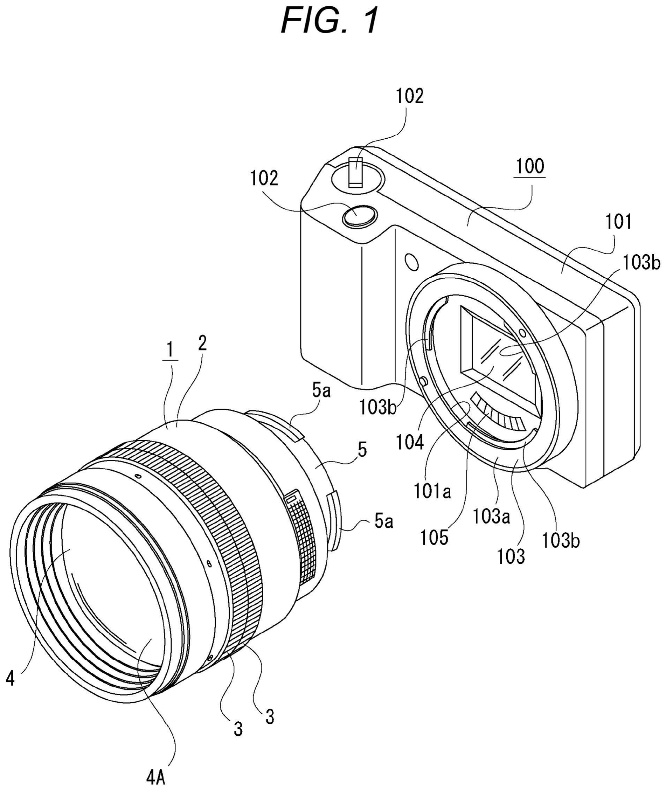

First, a configuration of the imaging device 100 to which the interchangeable lens 1 is attached and detached will be described (refer to Fig. 1).

The imaging device 100 is formed such that respective required components are arranged inside and outside a housing 101. On the housing 101, for example, two or more various operation units 102 are arranged on an upper surface or a rear surface. For example, as the operation unit 102, a power button, a shutter button, a zoom knob, a mode switching knob, and the like are provided.

On a rear surface of the housing 101, a display (display unit) (not illustrated) is arranged.

On a front surface of the housing 101, a circular opening 101a is formed, and a mount portion 103 for attaching the interchangeable lens 1 is provided on a portion around the opening 101a. The mount portion 103 includes an annular coupling ring 103a and two or more arc-shaped mount engagement portions 103b projecting inward from the coupling ring 103a, and the two or more mount engagement portions 103b are provided to be spaced apart in a circumferential direction.

An imaging element 104 such as a Charge Coupled Device (CCD) or a Complementary Metal-Oxide Semiconductor (CMOS) is disposed inside the housing 101, and the imaging element 104 is positioned behind the opening 101a.

An arc-shaped contact portion 105 is disposed at a lower end portion of the inner side of the mount portion 103.

### <2. Configuration of Interchangeable Lens>

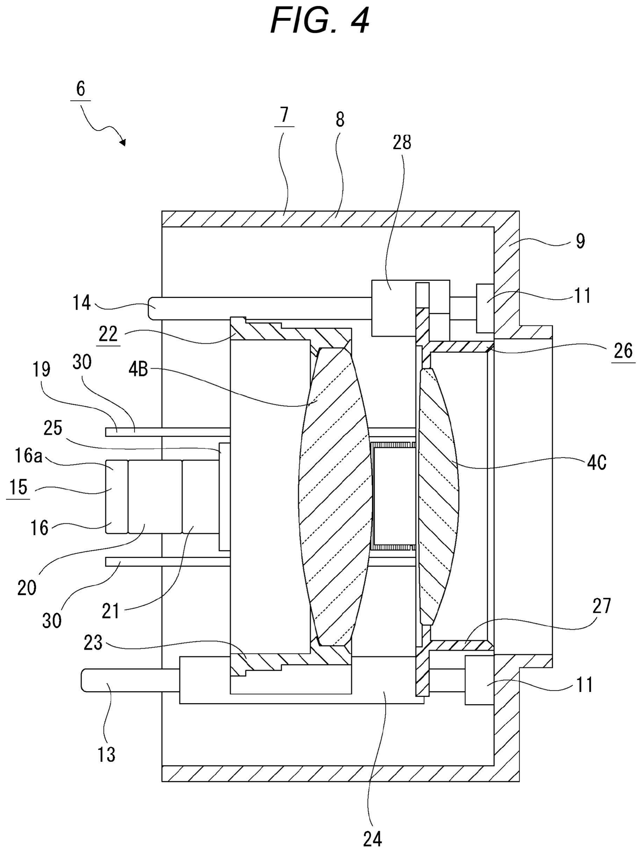

Next, a configuration of the interchangeable lens 1 will be described (refer to Figs. 1 to 8).

The interchangeable lens 1 is attachable to and detachable from the imaging device 100, and is formed such that respective required components are arranged inside and outside an outer barrel 2 (refer to Fig. 1).

On an outer circumferential surface of the outer barrel 2, for example, two or more adjustment rings 3 are rotatably supported in a state of being arranged in a front-rear direction. The adjustment ring 3 has a function of performing, for example, focusing adjustment, zooming adjustment, light amount adjustment of a diaphragm, and the like.

Inside the outer barrel 2, two or more optical elements are arranged to be spaced apart in the optical axis direction. The two or more optical elements include two or more lens groups 4 each including at least one lens. The lens group 4 includes a front-side lens group 4A positioned at a most front side among optical elements, and a first lens group 4B and a second lens group 4C that are moved forward and rearward during focusing.

A lens mount 5 is attached to a rear end portion of the outer barrel 2. Two or more engagement protrusion portions 5a projecting outward are provided to the lens mount 5 to be spaced apart in the circumferential direction. A connection terminal (not illustrated) is provided on a rear end surface of the lens mount 5.

The interchangeable lens 1 is attached to the imaging device 100 by coupling the lens mount 5 to the mount portion 103. Attachment of the interchangeable lens 1 to the imaging device 100 can be performed by rotating the interchangeable lens 1 as a whole about an optical axis direction with respect to the imaging device 100.

In a state where the interchangeable lens 1 is attached to the imaging device 100, the connection terminal is connected to the contact portion 105 of the imaging device 100. Accordingly, a state is established in which transmission and reception of signals and supply of power between the interchangeable lens 1 and the imaging device 100 are enabled.

Removal of the interchangeable lens 1 from the imaging device 100 can be performed by rotating the interchangeable lens 1 as a whole in a direction opposite to the direction at the time of attachment about the optical axis direction with respect to the imaging device 100, and separating the interchangeable lens 1 from the imaging device 100.

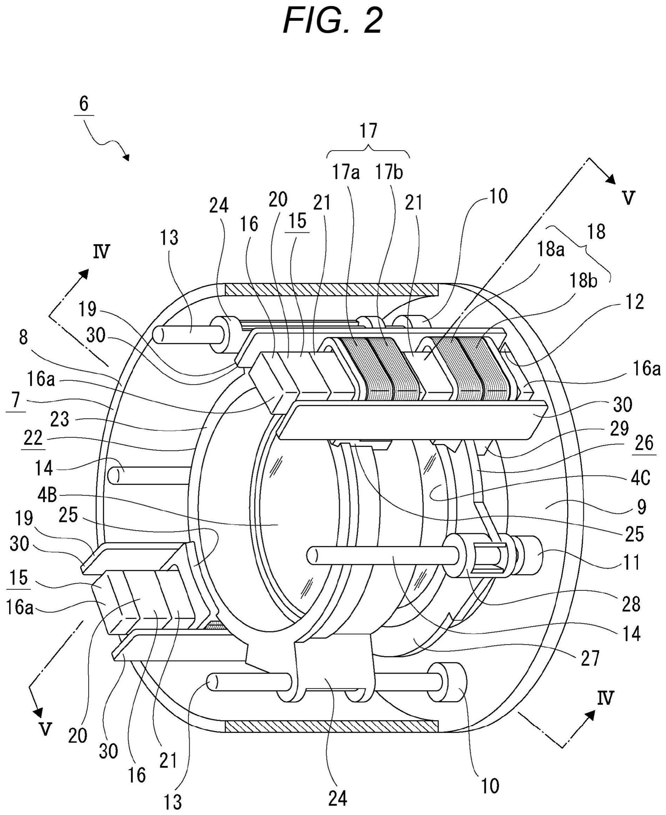

A mechanism unit 6 is disposed inside the interchangeable lens 1 (refer to Figs. 2 to 6). The mechanism unit 6 is formed such that respective required components are arranged or supported in an inner barrel 7. Note that in the interchangeable lens 1, the inner barrel 7 may be provided integrally with the outer barrel 2 as a part of the outer barrel 2.

The inner barrel 7 includes a non-magnetic material such as a resin material or of a magnetic material, and includes a cylindrical main body portion 8 in which an optical axis direction (front-rear direction) is set as an axial direction, and an inner flange portion 9 projecting inward from one end portion of the main body portion 8 in the axial direction.

The inner flange portion 9 is provided with two first bearing protrusion portions 10 at positions spaced apart in the circumferential direction. The inner flange portion 9 is provided with two second bearing protrusion portions 11 at positions spaced apart in the circumferential direction, and the second bearing protrusion portions 11 are positioned apart from the first bearing protrusion portions 10 in the circumferential direction.

The inner flange portion 9 is formed with two holding recesses 12. Each holding recess 12 is formed in a shape opened forward, and is positioned between the first bearing protrusion portion 10 and the second bearing protrusion portion 11. On the inner flange portion 9, A yoke attachment portion (not illustrated) is provided at each of positions on both sides of the holding recesses 12 in the circumferential direction.

One end portions of two first guide shafts 13 and one end portions of two second guide shafts 14 are attached to the inner barrel 7, respectively (refer to Figs. 2 to 4). A rear end portion of the first guide shaft 13 is attached to the first bearing protrusion portion 10, and a front end portion thereof is attached to a first bearing (not illustrated). A rear end portion of the second guide shaft 14 is attached to the second bearing protrusion portion 11, and a front end portion thereof is attached to a second bearing (not illustrated).

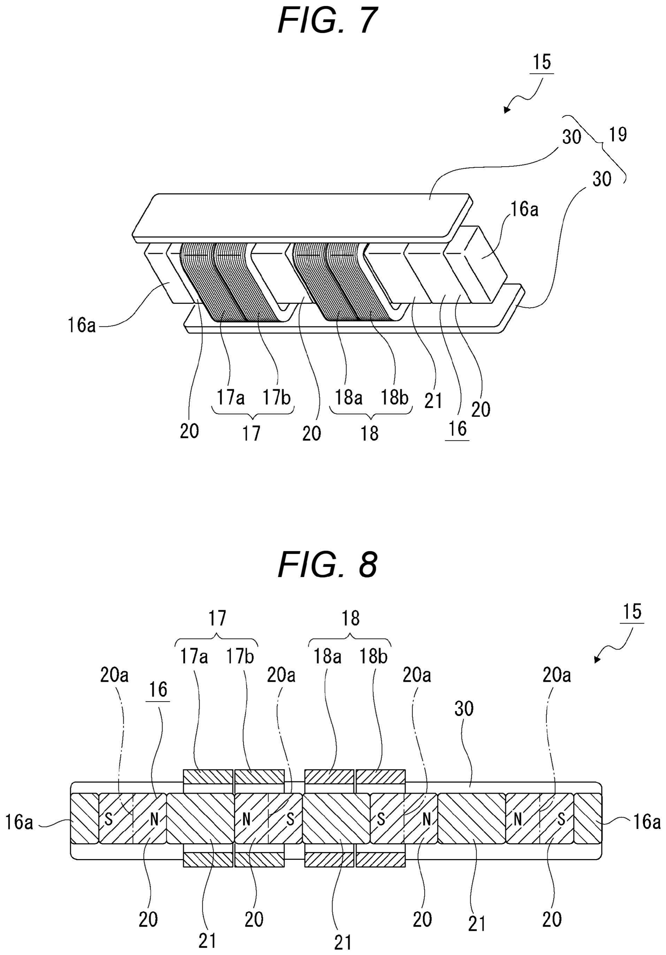

A pair of linear actuators 15 are disposed on opposite sides of a central axis of the main body portion 8 in the inner barrel 7 (refer to Figs. 2 to 6). Each linear actuator 15 includes a fixed rod 16, a first movable coil 17, a second movable coil 18, and an outer yoke 19 (refer to Figs. 7 and 8).

The fixed rod 16 includes a plurality of magnets 20 and a plurality of inner yokes 21, and the magnets 20 and the inner yokes 21 are coupled in a straight line in the front-rear direction alternately, for example, by adhesion and the like. The cross-sectional shape of the fixed rod 16 in a direction orthogonal to a coupling direction of the magnets 20 and the inner yokes 21 is formed in, for example, a substantially rectangular shape.

N poles and S poles of the magnets 20 are magnetized in the coupling direction of the magnets 20 and the inner yokes 21 (refer to Fig. 8). In the fixed rod 16, the same poles of different magnets 20 are coupled to both ends of each inner yoke 21. That is, each magnet 20 is set such that the same poles (an N pole and an N pole, or an S pole and an S pole) face each other via the inner yoke 21.

Each magnet 20 is set such that a boundary 20a between the N pole and the S pole is positioned at a predetermined position in the coupling direction. Accordingly, regardless of respective lengths of the magnets 20 and the inner yokes 21 in the coupling direction, positions of the boundaries 20a are defined at respective predetermined positions (refer to Fig. 8).

The inner yoke 21 includes a magnetic material such as iron. The outer shape of the inner yoke 21 is, for example, the same as the outer shape of the magnet 20.

Coupling members 16a referred to as side yokes are provided at both end portions of the fixed rod 16 in the coupling direction, and each coupling member 16a is attached to the magnet 20, for example, by adhesion and the like (refer to Figs. 7 and 8). Each coupling member 16a also includes a magnetic material such as iron, similarly to the inner yoke 21.

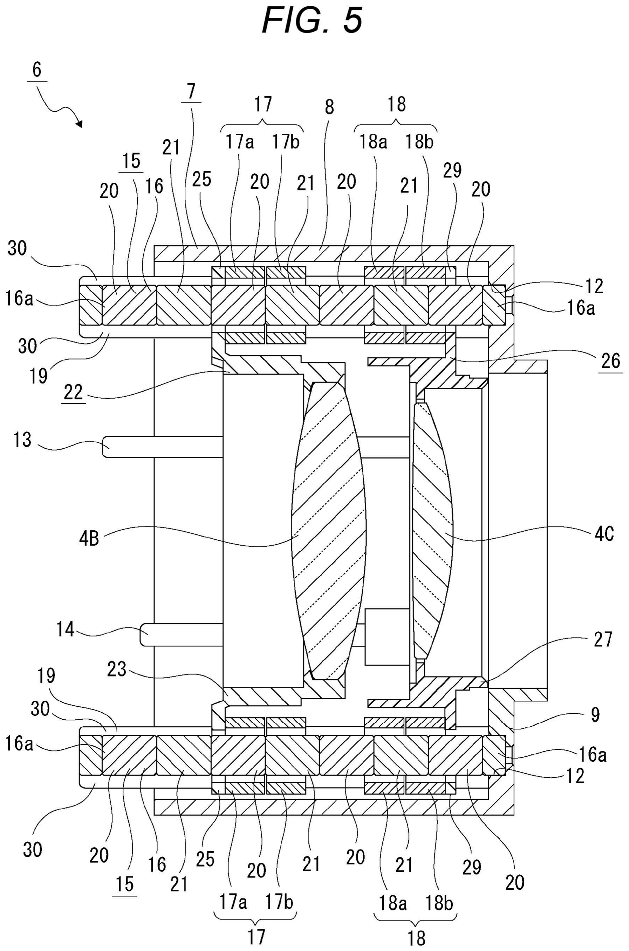

The first movable coil 17 and the second movable coil 18 are formed in a substantially rectangular-tubular shape as a whole in accordance with the shape of the fixed rod 16. One fixed rod 16 is inserted through the first movable coil 17 and the second movable coil 18 (refer to Figs. 5, 7, and 8). Note that the number of movable coils through which one fixed rod 16 is inserted may be any plural number as long as it is plural, the same number of movable coils as the number of movable bodies to be described later are provided, and for example, in a case where three movable bodies are provided, one fixed rod 16 is inserted through three movable coils.

A movable range of the first movable coil 17 with respect to the fixed rod 16 and a movable range of the second movable coil 18 with respect to the fixed rod 16 are set such that at least the movable ranges partially overlap. Specifically, as will be described later, the first movable coil 17 and the second movable coil 18 avoid collision by controlling positions with respect to the fixed rod 16 individually.

Each of the first movable coil 17 and the second movable coil 18 has, for example, a two-phase configuration in which a first-phase coil portion constituting a first phase and a second-phase coil portion constituting a second phase are arranged in the optical axis direction from the subject side. A predetermined gap for passing a winding is formed between a coil portion constituting the first phase and a coil portion constituting the second phase, and the first movable coil 17 and the second movable coil 18 are formed by filling the gap with an adhesive.

Here, the first movable coil 17 has a two-phase configuration including a first-phase coil portion 17a and a second-phase coil portion 17b. Furthermore, the second movable coil 18 also has a two-phase configuration including a first-phase coil portion 18a and a second-phase coil portion 18b.

When current is supplied to the first movable coil 17, a thrust is generated in the first movable coil 17 in relation to magnetic flux generated in the fixed rod 16, and the first movable coil 17 is moved in the coupling direction (optical axis direction) of the fixed rod 16 in accordance with a direction of current supplied to the first movable coil 17. Accordingly, in the linear actuator 15, the fixed rod 16 functions as a fixed portion and the first movable coil 17 functions as a movable portion.

Furthermore, when current is supplied to the second movable coil 18, a thrust is generated in the second movable coil 18 in relation to magnetic flux generated in the fixed rod 16, and the second movable coil 18 is moved in the coupling direction (optical axis direction) of the fixed rod 16 in accordance with a direction of current supplied to the second movable coil 18. Accordingly, in the linear actuator 15, the second movable coil 18 also functions as a movable portion.

The outer yoke 19 includes a magnetic material such as iron, in a flat plate shape, and includes, for example, a pair of opposing portions 30. The pair of opposing portions 30 are positioned on opposite sides with the fixed rod 16, the first movable coil 17, and the second movable coil 18 interposed therebetween, and are disposed so as to cover a part of each of the fixed rod 16, the first movable coil 17, and the second movable coil 18 from an outer peripheral side. A size of the opposing portion 30 in a longitudinal direction is made substantially the same as a length of the fixed rod 16 in the coupling direction.

In the linear actuator 15 configured as described above, a rear end portion of the fixed rod 16 is attached to the inner barrel 7 (refer to Figs. 2, 3, and 5). Attachment of the rear end portion of the fixed rod 16 to the inner barrel 7 is performed by inserting a part of one of the coupling members 16a into the holding recess 12 of the inner flange portion 9, and coupling the coupling member 16a to the inner flange portion 9 by screwing or the like. The fixed rod 16 is fixed by fixing the other coupling member 16a to a fixing member (not illustrated).

The rear end portions of the pair of opposing portions 30 of the outer yoke 19 are attached to yoke attachment portions provided on the inner flange portion 9 of the inner barrel 7, and the front end portions thereof are attached to attachment members (not illustrated).

Thus, since the outer yoke 19 is attached to the inner barrel 7 and the attachment member, the outer yoke 19 functions as a fixed portion. Accordingly, in the linear actuator 15, the fixed rod 16 and the outer yoke 19 function as fixed portions, and the first movable coil 17 and the second movable coil 18 function as movable portions.

On the first guide shaft 13, a first holding frame 22 and the first lens group 4B, which are provided as movable bodies, are supported so as to be movable in the optical axis direction (refer to Figs. 2 to 6). The first lens group 4B is one of the lens groups 4, is held by the first holding frame 22, and functions, for example, as a focus lens.

The first holding frame 22 includes a frame-shaped lens holding portion 23, two supported portions 24 projecting in opposite directions on the outer peripheral side from the lens holding portion 23, and two coil attachment portions 25 projecting in opposite directions on the outer peripheral side from the lens holding portion 23. The supported portions 24 and the coil attachment portions 25 project from different positions of the lens holding portion 23 in the circumferential direction.

The first lens group 4B is held by the lens holding portion 23. The first lens group 4B is attached to the lens holding portion 23 by adhesion, press-fitting, or the like.

The supported portion 24 is slidably supported on the first guide shaft 13. Accordingly, the first holding frame 22 and the first lens group 4B are guided together by the first guide shaft 13 and are moved in the optical axis direction.

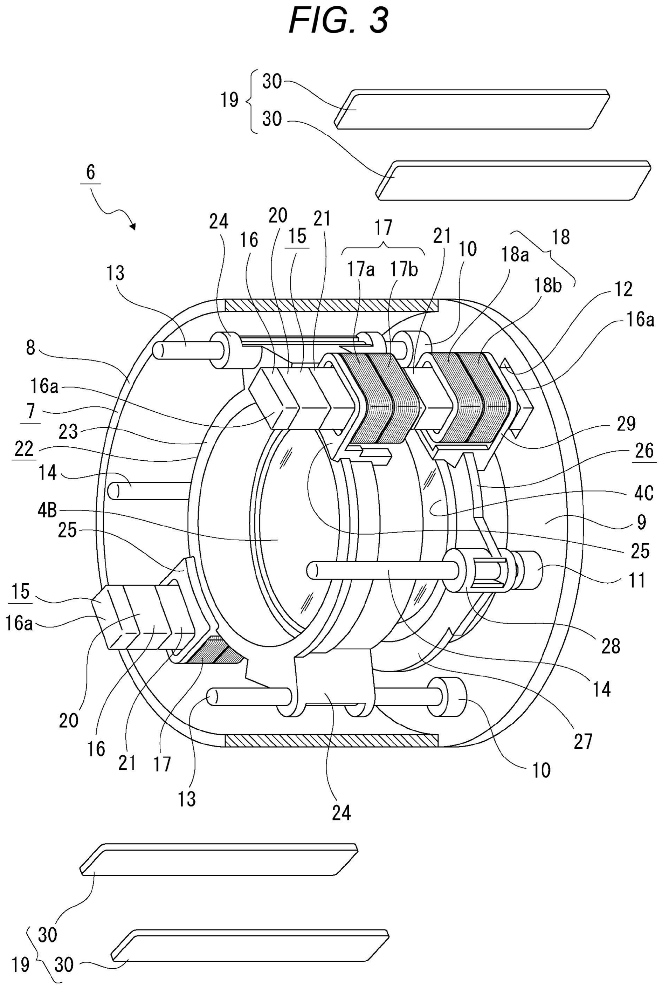

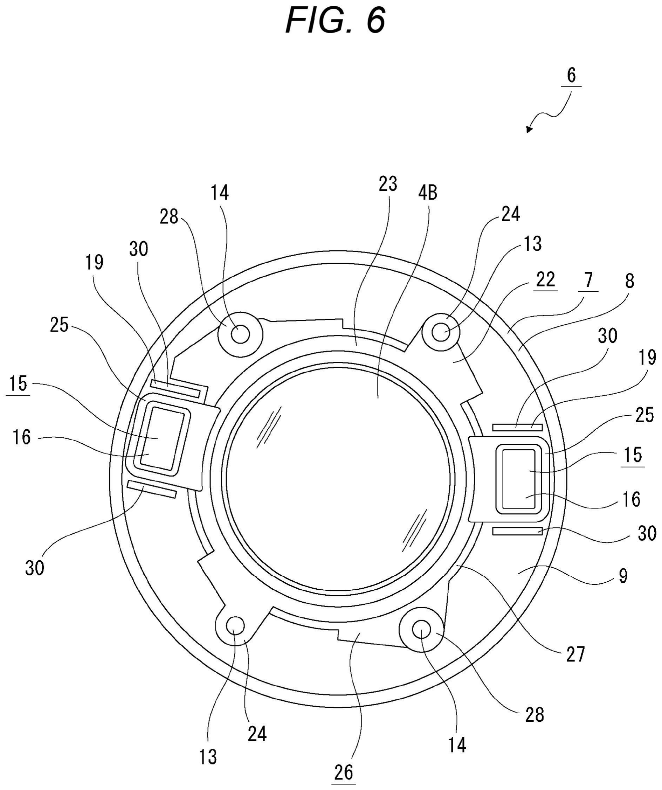

The first movable coil 17 is attached to the coil attachment portion 25 by adhesion or the like (refer to Figs. 3 and 6). Accordingly, when current is supplied to the first movable coil 17 and the first movable coil 17 is moved in the optical axis direction with respect to the fixed rod 16, the first holding frame 22 and the first lens group 4B are moved in the optical axis direction together with the first movable coil 17, and the first movable coil 17, the first lens group 4B, and the first holding frame 22 function as movable bodies.

On the second guide shaft 14, a second holding frame 26 and the second lens group 4C, which are provided as movable bodies, are supported so as to be movable in the optical axis direction (refer to Figs. 2 to 5). The second holding frame 26 and the second lens group 4C are positioned behind the first holding frame 22 and the first lens group 4B. The second lens group 4C is one of the lens groups 4, is held by the second holding frame 26, and functions, for example, as a focus lens.

Note that both the first lens group 4B and the second lens group 4C function as focus lenses, but one of the lens groups 4 functions as a floating lens group that suppresses variation in aberration in a case where the other lens group 4 is moved.

The second holding frame 26 includes a frame-shaped lens holding portion 27, two supported portions 28 projecting in opposite directions on the outer peripheral side from the lens holding portion 27, and two coil attachment portions 29 projecting in opposite directions on the outer peripheral side from the lens holding portion 27. The supported portions 28 and the coil attachment portions 29 project from different positions of the lens holding portion 27 in the circumferential direction.

The second lens group 4C is held by the lens holding portion 27. The second lens group 4C is attached to the lens holding portion 27 by adhesion, press-fitting, or the like.

The supported portion 28 is slidably supported on the second guide shaft 14. Accordingly, the second holding frame 26 and the second lens group 4C are guided together by the second guide shaft 14 and are moved in the optical axis direction.

The second movable coil 18 is attached to the coil attachment portion 29 by adhesion or the like (refer to Fig. 3). Accordingly, when current is supplied to the second movable coil 18 and the second movable coil 18 is moved in the optical axis direction with respect to the fixed rod 16, the second holding frame 26 and the second lens group 4C are moved in the optical axis direction together with the second movable coil 18, and the second movable coil 18, the second lens group 4C, and the second holding frame 26 function as movable bodies.

For example, focusing is performed by moving at least one of the first lens group 4B and the second lens group 4C in the optical axis direction.

Note that the first lens group 4B and the second lens group 4C may be lens groups used for zooming, and one of them may be a floating lens group. Furthermore, the present invention is not limited thereto, and the first lens group 4B and the second lens group 4C may also be provided as having other functions.

### <3. Relationship between Magnetic Flux and Movable Coil, and the Like>

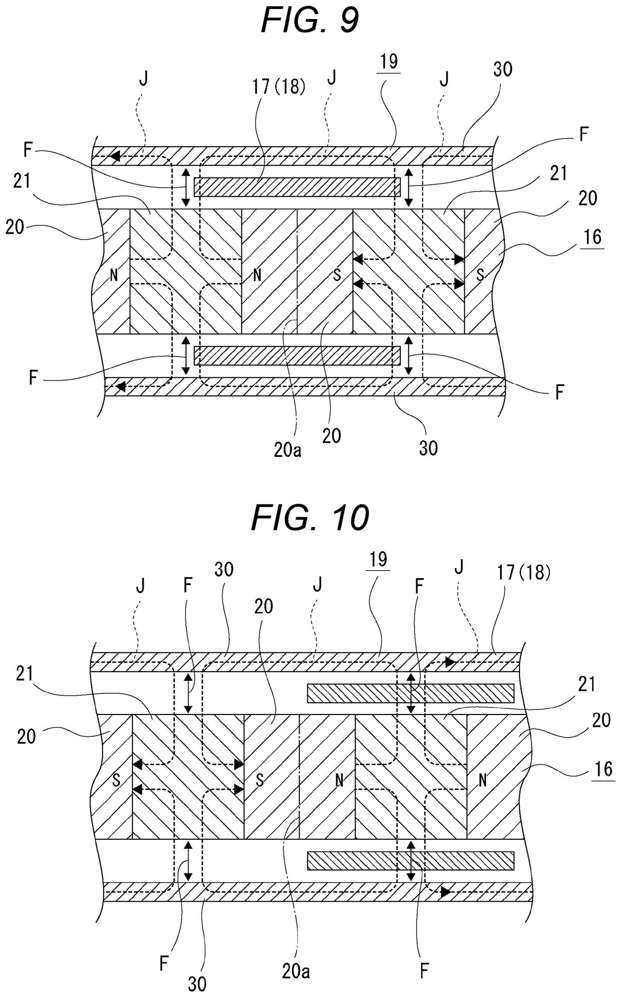

Next, a relationship or the like between magnetic flux generated in the linear actuator 15 and the first movable coil 17 (the second movable coil 18) will be described (refer to Figs. 9 to 12). Note that since the relationship or the like between the magnetic flux and the first movable coil 17 and the relationship or the like between the magnetic flux and the second movable coil 18 are the same, description will be made below, as an example, regarding the relationship or the like between the magnetic flux and the first movable coil 17. Furthermore, Figs. 9 to 11 illustrate conceptual diagrams for easily describing the relationship or the like between the magnetic flux generated in the linear actuator 15 and the first movable coil 17.

As described above, in the fixed rod 16 of the linear actuator 15, the magnets 20 and the inner yokes 21 are alternately coupled, N poles and S poles of the magnets 20 are magnetized in the coupling direction, and in the magnets 20 which are adjacent to each other with the inner yoke 21 interposed therebetween, the same poles, namely an N pole and an N pole or an S pole and an S pole, are coupled to both surfaces of the inner yoke 21 (refer to Figs. 9 and 10).

Note that Fig. 9 illustrates an example of a state in which a center of the first movable coil 17 in the axial direction coincides with a center of the magnet 20 in the coupling direction, and Fig. 10 illustrates an example of a state in which a center of the first movable coil 17 in the axial direction coincides with a center of the inner yoke 21 in the coupling direction.

In a case where the pair of opposing portions 30 of the outer yoke 19 are positioned vertically and a direction in which the opposing portions 30 are absent is a left-right direction, in an up-down direction, magnetic flux J generated in the magnet 20 passes from an N pole through the inner yoke 21 coupled to one surface of the magnet 20, crosses the first movable coil 17, passes through the opposing portion 30 of the outer yoke 19, crosses the first movable coil 17 again, passes through the inner yoke 21 coupled to the other surface of the magnet 20, and reaches an S pole (refer to Figs. 9 and 10). On the other hand, in the left-right direction, magnetic flux J generated in the magnet 20 passes from an N pole through the inner yoke 21 coupled to one surface of the magnet 20, crosses the first movable coil 17, crosses the first movable coil 17 again, passes through the inner yoke 21 coupled to the other surface of the magnet 20, and reaches an S pole.

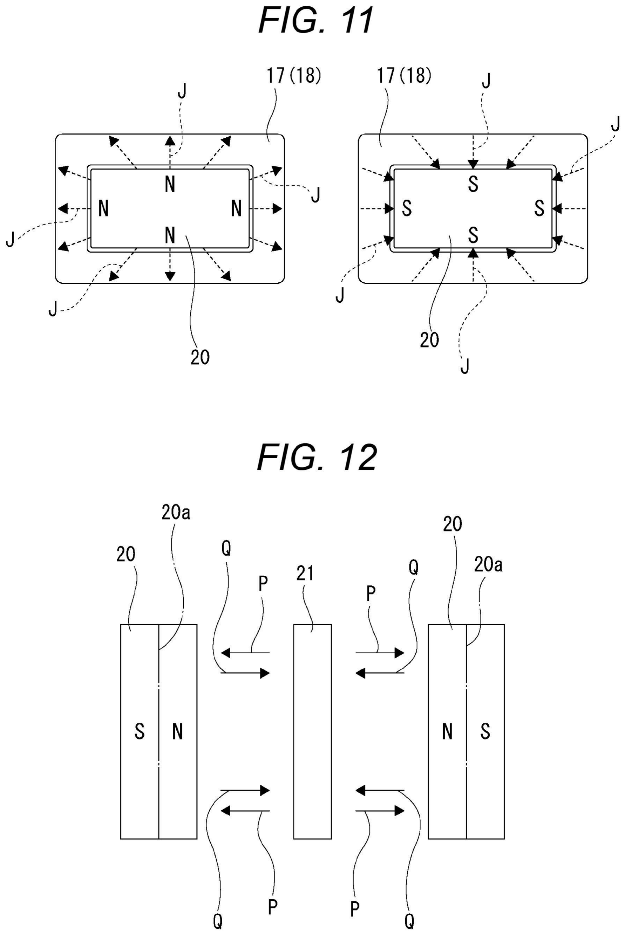

Accordingly, the magnetic flux J crosses the entire circumference of the first movable coil 17 (refer to Fig. 11). Since magnetic flux J crosses the entire circumference of the first movable coil 17 in this manner, the magnetic flux J greatly contributes to thrust of the first movable coil 17 to generate the thrust on the entire circumference of the first movable coil 17, and high driving efficiency in the linear actuator 15 can be ensured.

Furthermore, since thrust is generated on the entire circumference of the first movable coil 17 and high driving efficiency in the linear actuator 15 can be ensured, sufficient driving force can be secured even when respective components in the linear actuator 15 are made small, and downsizing and weight reduction of the linear actuator 15 can be achieved.

Moreover, since the magnetic flux J crossing the first movable coil 17, except for a part thereof, passes through the two opposing portions 30 positioned on the outer peripheral side of the first movable coil 17 and proceeds toward an S pole, magnetic flux leakage is reduced by the outer yoke 19, and thrust of the first movable coil 17 can be further improved.

On the other hand, in the linear actuator 15, the same poles of adjacent magnets 20 are coupled to the inner yoke 21 (refer to Fig. 12). Accordingly, a repulsive force P is generated between the adjacent magnets 20, but in the linear actuator 15, the inner yoke 21 is disposed between the adjacent magnets 20, and therefore, an attraction force Q is generated between the inner yoke 21 and the magnets 20, and the repulsive force P generated between the magnets 20 is reduced.

Furthermore, since the inner yoke 21 is disposed between the adjacent magnets 20, the adjacent magnets 20 are disposed with a certain interval therebetween, and thereby the repulsive force P generated between the magnets 20 is also reduced.

Accordingly, difficulty in assembling the fixed rod 16 due to generation of the repulsive force P at the time of coupling of the magnets 20 and the inner yoke 21 is reduced, and the fixed rod 16 having a configuration in which the same poles of the adjacent magnets 20 are coupled to the inner yoke 21 can be assembled easily and in a stable state.

In the linear actuator 15, since the outer yoke 19 is disposed on the outer side of the fixed rod 16, it is possible to reduce generation of magnetic flux leakage as described above, but due to the presence of the outer yoke 19, a magnetic attraction force F is generated between the outer yoke 19 and the fixed rod 16 (refer to Figs. 9 and 10). At this time, by the magnetic attraction force F, a load in a direction in which the fixed rod 16 is drawn to the opposing portions 30 side and deformed is generated

However, in the linear actuator 15, the outer yoke 19 includes the pair of opposing portions 30 positioned on opposite sides with the fixed rod 16 interposed therebetween.

Accordingly, since a force that draws the fixed rod 16 in opposite directions is generated by the pair of opposing portions 30, it is difficult for a force in a direction in which the fixed rod 16 is bent to occur by the force generated in the opposite directions, and deformation of the fixed rod 16 can be suppressed.

Furthermore, since magnetic flux leakage is reduced by the pair of opposing portions 30, the driving efficiency for the first movable coil 17 and the second movable coil 18 can be improved.

### <4. Functional Configuration of Imaging Device>

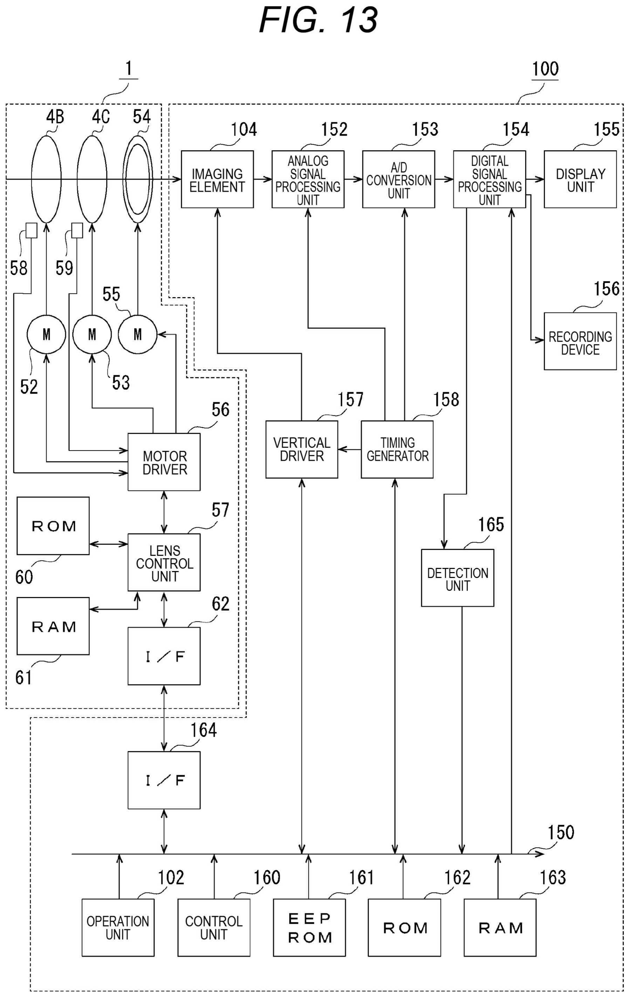

Functional configurations of the imaging device 100 and the interchangeable lens 1 will be described (refer to Fig. 13).

The imaging device 100 captures a subject to generate image data, and records the generated image data as image content (still image content or moving image content).

The imaging device 100 includes a system bus 150, the imaging element 104, an analog signal processing unit 152, and an analog/digital (A/D) conversion unit 153. Furthermore, the imaging device 100 also includes a digital signal processing unit 154, a display unit 155, and a recording device 156.

Furthermore, the imaging device 100 includes a vertical driver 157, a timing generator 158, an operation unit 102, and a control unit 160. Furthermore, the imaging device 100 includes an Electrically Erasable and Programmable Read Only Memory (EEPROM) 161, a Read Only Memory (ROM) 162, and a Random Access Memory (RAM) 163. Moreover, the imaging device 100 includes an interface unit 164 and a detection unit 165.

Note that the digital signal processing unit 154, the vertical driver 157, the timing generator 158, the operation unit 102, and the detection unit 165 are connected via the system bus 150 so as to be communicable with, for example, the control unit 160 and the like. Furthermore, the EEPROM 161, the ROM 162, and the RAM 163 are also connected via the system bus 150 so as to be communicable with the control unit 160 and the like.

The imaging element 104 includes a photoelectric conversion element that receives light (incident light) supplied via optical elements such as the first lens group 4B and the second lens group 4C as zoom lenses and converts the received incident light into an electric signal according to an amount of incident light, and supplies the converted electric signal to the analog signal processing unit 152. Furthermore, the imaging element 104 is driven by the vertical driver 157. Note that as the imaging element 104, for example, a Charge Coupled Device (CCD) sensor, a Complementary Metal Oxide Semiconductor (CMOS) sensor, or the like can be used.

The analog signal processing unit 152 performs analog signal processing such as noise removal processing on the electric signal supplied from the imaging element 104 in accordance with timing instructed by the timing generator 158. The analog signal that has been subjected to the analog signal processing by the analog signal processing unit 152 is supplied to the A/D conversion unit 153.

The A/D conversion unit 153 converts the analog signal supplied from the analog signal processing unit 152 into a digital signal in accordance with timing instructed by the timing generator 158, and supplies the converted digital signal to the digital signal processing unit 154.

The digital signal processing unit 154 performs image processing such as black level correction, white balance adjustment, and gamma correction on the digital signal supplied from the A/D conversion unit 153 on the basis of control of the control unit 160. Then, the digital signal processing unit 154 supplies the image data subjected to the image processing to the display unit 155 and the recording device 156. For example, the digital signal processing unit 154 performs compression processing on the image data subjected to the image processing, and supplies the image data subjected to the compression processing (compressed image data) to the recording device 156. Note that as a compression method, for example, a Joint Photographic Experts Group (JPEG) method can be adopted. Furthermore, it is also possible to supply image data in a RAW data format, which is not subjected to compression processing, to the recording device 156. Furthermore, the digital signal processing unit 154 also performs decompression processing on the compressed image data recorded in the recording device 156, and supplies the image data subjected to the decompression processing to the display unit 155. Note that the digital signal processing unit 154 can be implemented by a signal processing device as a Digital Signal Processor (DSP).

The display unit 155 is a display device that displays image data supplied from the digital signal processing unit 154. The display unit 155 displays, for example, image data subjected to the image processing by the digital signal processing unit 154 as a through image. Furthermore, the display unit 155 displays, for example, image data recorded in the recording device 156 as a list image. As the display unit 155, for example, a display panel such as an organic Electro Luminescence (EL) panel or a Liquid Crystal Display (LCD) can be used.

The recording device 156 records the image data subjected to the image processing by the digital signal processing unit 154. Furthermore, the image data recorded in the recording device 156 is supplied to the digital signal processing unit 154. Note that the recording device 156 may be built into the imaging device 100, or may be made attachable to and detachable from the imaging device 100. Furthermore, as the recording device 156, various devices such as a semiconductor memory, an optical recording medium, a magnetic disk, or a Hard Disk Drive (HDD) can be used. Note that as the optical recording medium, for example, a recordable Digital Versatile Disc (DVD), a recordable Compact Disc (CD), or a Blu-ray Disc (registered trademark) can be used.

The vertical driver 157 drives the imaging element 104 on the basis of control of the control unit 160. The timing generator 158 instructs operation timing in each of the analog signal processing unit 152 and the A/D conversion unit 153 on the basis of a reference clock supplied from the control unit 160. Specifically, this instruction of the operation timing is performed by outputting, for example, a timing signal generated on the basis of the above-described reference clock to the analog signal processing unit 152 and the A/D conversion unit 153.

As described above, as the operation unit 102, a power button, a shutter button, a zoom knob, a mode switching knob, and the like are provided. The operation unit 102 receives an operation input from a user via various operable members, and outputs content of the received operation input to the control unit 160 via the system bus 150. Note that, in addition to operable members such as buttons disposed on an outer surface of the housing 101 of the imaging device 100, a touch panel may be provided on the display unit 155 so that operation input from the user is received by the touch panel.

The EEPROM 161 is a memory that retains data even while power of the imaging device 100 is off, and various setting conditions and the like are recorded therein. The ROM 162 is a non-volatile memory that stores programs to be executed by the control unit 160 and various data. The RAM 163 is a volatile memory that holds data to be temporarily held and rewritable data when the control unit 160 operates, and is used, for example, as a work memory when the control unit 160 operates.

The interface unit 164 executes communication with the interchangeable lens 1 by being connected to the interchangeable lens 1 mounted on the imaging device 100.

The interchangeable lens 1 includes a zoom lens and a zoom lens driving motor (not shown), the first lens group 4B and the second lens group 4C that function as focus lenses, focus lens driving motors 52 and 53, a diaphragm mechanism 54, a diaphragm driving motor 55, a motor driver 56, and a lens control unit 57.

The interchangeable lens 1 includes a first sensor 58 that detects a position of the first lens group 4B, and a second sensor 59 that detects a position of the second lens group 4C.

Furthermore, the interchangeable lens 1 includes a ROM 60, a RAM 61, and an interface unit 62.

The zoom lens is a lens that is moved in the optical axis direction by either electric driving or manual driving to adjust a focal length. That is, the zoom lens is a lens driven forward and rearward with respect to a subject in order to magnify or reduce the subject included in a captured image. Furthermore, zooming is realized by the zoom lens.

A zoom position detection unit (not illustrated) detects a position of the zoom lens driven by a zooming operation by the user, and outputs a detection result to the lens control unit 57.

The first lens group 4B functioning as a focus lens is a lens that is moved in the optical axis direction by driving of the focus lens driving motor 52 to adjust focus. That is, the first lens group 4B is a lens used to focus on the subject (bring the subject into focus).

Furthermore, the second lens group 4C is, for example, set as the above-described floating lens group, and is moved in the optical axis direction in accordance with movement of the first lens group 4B. The second lens group 4C is moved in response to driving of the focus lens driving motor 53.

By movement of the first lens group 4B and the second lens group 4C, an autofocus function is achieved.

The focus lens driving motors 52 and 53 drive the first lens group 4B and the second lens group 4C on the basis of control of the motor driver 56.

The diaphragm mechanism 54 adjusts an amount of incident light passing through the zoom lens, the first lens group 4B, and the second lens group 4C, and the adjusted light is supplied to the imaging element 104. The diaphragm mechanism 54 is driven by the diaphragm driving motor 55, and an aperture of the diaphragm is adjusted.

The diaphragm driving motor 55 drives the diaphragm mechanism 54 on the basis of control of the motor driver 56.

That is, the zoom lens and the first lens group 4B and the second lens group 4C functioning as focus lenses are lens groups that converge incident light from the subject, and the light converged by these lens groups is incident on the imaging element 104 via the diaphragm mechanism 54.

The motor driver 56 drives the zoom lens driving motor, the focus lens driving motors 52 and 53, and the diaphragm driving motor 55 on the basis of control of the lens control unit 57.

The lens control unit 57 controls respective components (the zoom lens, the first lens group 4B, the second lens group 4C, the diaphragm mechanism 54, and the like) constituting the interchangeable lens 1. The lens control unit 57 includes, for example, a Central Processing Unit (CPU).

The ROM 60 stores unique information regarding respective members constituting the interchangeable lens 1, and programs to be executed by the CPU as the lens control unit 57. The RAM 61 is used as a work area when the lens control unit 57 executes arithmetic processing. The interface unit 62 performs communication with the imaging device 100.

The control unit 160 of the imaging device 100 includes, for example, a CPU that executes a program stored in the ROM 162, and realizes a function of controlling respective components of the imaging device 100 and the interchangeable lens 1 on the basis of various kinds of information stored in the ROM 162. The control unit 160 controls, for example, exposure, white balance, focus, flash emission, and the like. Furthermore, for example, at the time of imaging, the control unit 160 generates a control signal on the basis of the operation input from the user via the operation unit 102 and image information from the digital signal processing unit 154. Then, the generated control signal is output to the motor driver 56, the vertical driver 157, the timing generator 158, and the like, and control such as exposure, white balance, focus, and flash is performed by operating the first lens group 4B and the second lens group 4C functioning as focus lenses, the diaphragm mechanism 54, and the like.

Furthermore, in a case where image data subjected to the image processing by the digital signal processing unit 154 is recorded, the control unit 160 outputs a control signal to the digital signal processing unit 154 on the basis of the operation input from the user via the operation unit 102. Then, the image data subjected to the compression processing by the digital signal processing unit 154 is recorded as a still image file in the recording device 156. Furthermore, in a case where the still image file recorded in the recording device 156 is displayed, the control unit 160 outputs a control signal to the digital signal processing unit 154 on the basis of the operation input from the user via the operation unit 102. Then, an image corresponding to the still image file or the moving image file recorded in the recording device 156 is displayed on the display unit 155.

The detection unit 165 performs detection to extract contrast components from an image signal in correspondence with autofocus control using a contrast method adopted by the imaging device 100, and obtains an evaluation value regarding contrast. The control unit 160 executes autofocus control for moving the first lens group 4B and the second lens group 4C functioning as focus lenses so as to achieve a focused state, on the basis of the evaluation value generated by the detection unit 165. Note that, in practice, the detection unit 165 may be configured, for example, as one function executed by the digital signal processing unit 154. Alternatively, at least a part of the signal processing function may be executed by the control unit 160.

### <5. Initialization Control>

The control unit 160 transmits information indicating that the imaging device 100 has been activated to the interchangeable lens 1.

The lens control unit 57 of the interchangeable lens 1 performs initialization control for preparing the first lens group 4B and the second lens group 4C functioning as focus lenses to be drivable on the basis of a focusing operation by the user, in response to reception of the information.

In the initialization control, for example, processing of synchronizing an electrical angle in control of the first lens group 4B with a position of the first movable coil 17, and processing of synchronizing an electrical angle in control of the second lens group 4C with a position of the second movable coil 18 are performed.

Note that, in this example, the position of the first movable coil 17 is set to a position of a boundary portion between a first-phase coil 17a and a second-phase coil 17b in the optical axis direction. Similarly, the position of the second movable coil 18 is set to a position of a boundary portion between a first-phase coil 18a and a second-phase coil 18b in the optical axis direction.

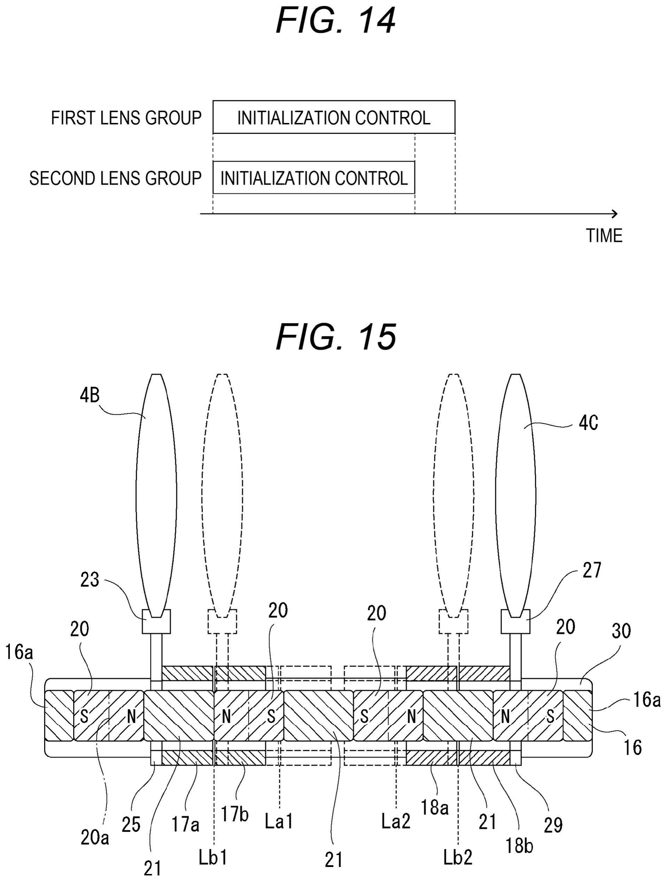

Furthermore, the lens control unit 57 in the present embodiment does not perform initialization control for the first lens group 4B and initialization control for the second lens group 4C in a time-division manner, but performs the initialization control with at least a part of periods overlapped (for example, refer to Fig. 14).

In the initialization control, by respectively driving the first movable coil 17 and the second movable coil 18, the first lens group 4B and the second lens group 4C are moved to their respective initial positions (refer to Fig. 15).

Here, a position of the first movable coil 17 before the initialization control is executed is defined as a first pre-control position La1, and a position of the second movable coil 18 before the initialization control is executed is defined as a second pre-control position La2.

Furthermore, a position of the first movable coil 17 moved by the initialization control is defined as a first initial position Lb1, and a position of the second movable coil 18 moved by the initialization control is defined as a second initial position Lb2.

The first initial position Lb1 and the second initial position Lb2 are determined on the basis of the first pre-control position La1 and the second pre-control position La2. This is to avoid collision between the first lens group 4B and the second lens group 4C by the initialization control.

The first pre-control position La1 and the second pre-control position La2 are roughly grasped by the first sensor 58 that detects the position of the first lens group 4B and the second sensor 59 that detects the position of the second lens group 4C.

For example, each of the first sensor 58 and the second sensor 59 is configured as a photoelectric sensor (Photo Interruption (PI) sensor) including a light emitting unit and a light receiving unit, and the first sensor 58 and the second sensor 59 detect the position of the first lens group 4B and the position of the second lens group 4C relatively by respectively detecting the positions of the first movable coil 17 and the second movable coil 18.

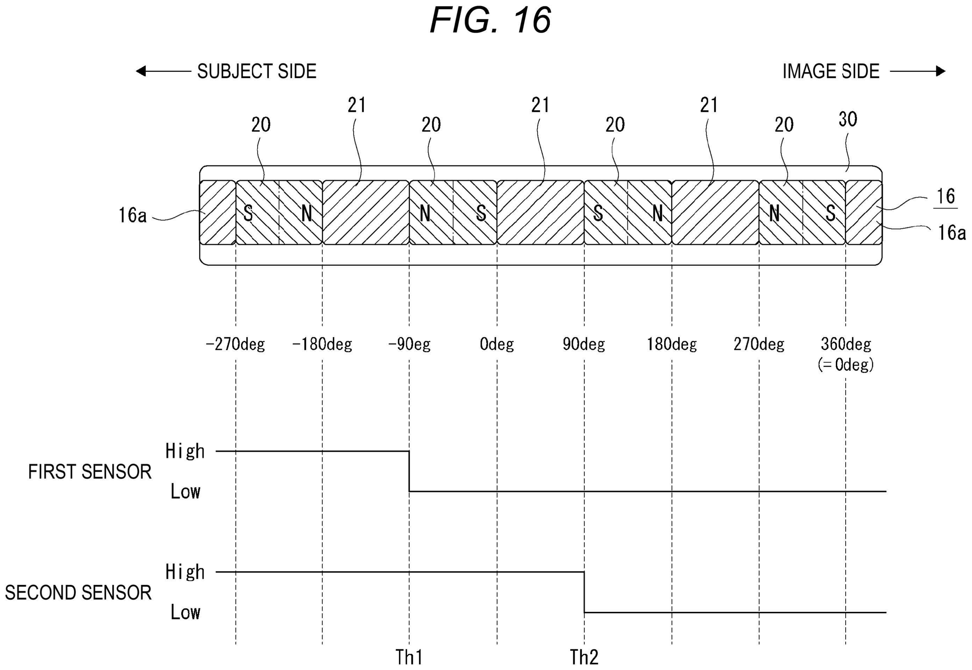

Fig. 16 illustrates a relationship among positions of the first movable coil 17 and the second movable coil 18 with respect to the fixed rod 16, electrical angles corresponding thereto, and detection results of the first sensor 58 and the second sensor 59. Note that the example illustrated in Fig. 16 is merely an example.

As illustrated in Fig. 16, among boundary portions between the magnets 20 and the inner yokes 21, a position at which the subject side is an S pole of the magnet 20 and an image side is the inner yoke 21 is defined as an electrical angle of 0 deg.

Furthermore, the electrical angle changes by 90 deg for each boundary portion between the magnets 20 and the inner yokes 21, with the subject side defined as a negative direction and the image side defined as a positive direction.

The first sensor 58 outputs a "High" signal in a case where the first movable coil 17 is positioned on the subject side relative to -90 deg, and outputs a "Low" signal in a case where the first movable coil 17 is positioned on the image side relative to -90 deg. Here, an electrical angle of -90 deg, which serves as a boundary portion for position determination of the first movable coil 17, is defined as a first threshold value Th1.

The second sensor 59 outputs a "High" signal in a case where the second movable coil 18 is positioned on the subject side relative to 90 deg, and outputs a "Low" signal in a case where the second movable coil 18 is positioned on the image side relative to 90 deg. Here, an electrical angle of 90 deg, which serves as a boundary portion for position determination of the second movable coil 18, is defined as a second threshold value Th2.

The first movable coil 17 and the second movable coil 18 can be stopped at a predetermined electrical angle by applying a predetermined excitation pattern to the first-phase coils 17a and 18a and the second-phase coils 17b and 18b. This excitation pattern at that time is referred to as a "stop excitation pattern Pt1".

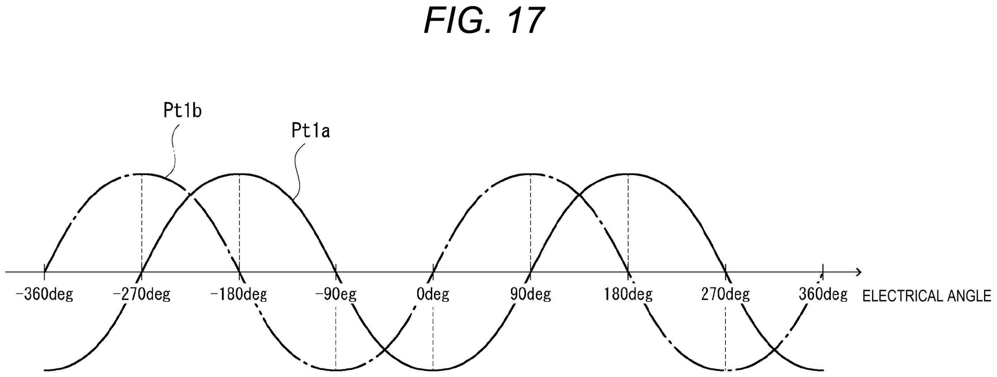

Fig. 17 illustrates the stop excitation pattern Pt1 applied to the first-phase coils 17a and 18a and the second-phase coils 17b and 18b. The stop excitation pattern Pt1 includes a first-phase signal Pt1a applied to the first-phase coils 17a and 18a, and a second-phase signal Pt1b applied to the second-phase coils 17b and 18b.

In Fig. 17, the first-phase signal Pt1a is indicated by a solid line, and the second-phase signal Pt1b is indicated by a one-dot chain line. Furthermore, a vertical axis of a graph illustrated in Fig. 17 indicates a voltage (or current).

In addition to the stop excitation pattern Pt1, excitation patterns applied to the first movable coil 17 and the second movable coil 18 include a high-speed movement excitation pattern that maximizes thrust of each coil.

Here, among the high-speed movement excitation patterns, an excitation pattern applied to maximize thrust for moving the first movable coil 17 and the second movable coil 18 to the image side is defined as an "image-side high-speed movement excitation pattern Ptp", and an excitation pattern applied to maximize thrust for moving the first movable coil 17 and the second movable coil 18 to the subject side is defined as a "subject-side high-speed movement excitation pattern Ptm".

That is, the image-side high-speed movement excitation pattern Ptp is an excitation pattern for moving the position of each movable coil to a positive side in the electrical angle, and the subject-side high-speed movement excitation pattern Ptm is an excitation pattern for moving the position of each movable coil to a negative side in the electrical angle.

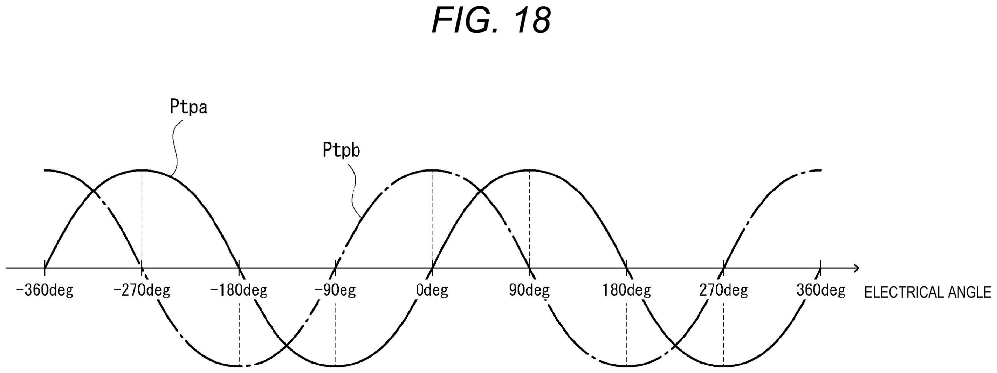

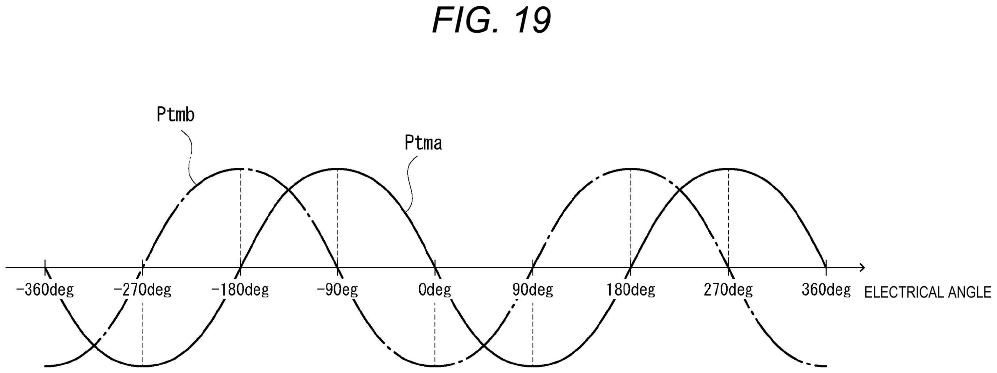

An example of the image-side high-speed movement excitation pattern Ptp is illustrated in Fig. 18, and an example of the subject-side high-speed movement excitation pattern Ptm is illustrated in Fig. 19.

The image-side high-speed movement excitation pattern Ptp includes a first-phase signal Ptpa applied to the first-phase coils 17a and 18a, and a second-phase signal Ptpb applied to the second-phase coils 17b and 18b.

The subject-side high-speed movement excitation pattern Ptm includes a first-phase signal Ptma applied to the first-phase coils 17a and 18a, and a second-phase signal Ptmb applied to the second-phase coils 17b and 18b.

Note that, among electrical angles from -180 deg to 180 deg, when an electrical angle at which thrust of the first movable coil 17 and the second movable coil 18 becomes maximum is defined as a maximum thrust angle Am, two maximum thrust angles of a first maximum thrust angle Am1 on the subject side and a second maximum thrust angle Am2 on the image side are provided as the maximum thrust angle Am.

In this example, the first maximum thrust angle Am1 is set to -90 deg, and the second maximum thrust angle Am2 is set to 90 deg.

The above-described first threshold value Th1 serving as the boundary portion of output by the first sensor 58 is the first maximum thrust angle Am1 (-90 deg).

Furthermore, the second threshold value Th2 according to the second sensor 59 is the second maximum thrust angle Am2 (90 deg).

At least one of the first initial position Lb1 at which the first movable coil 17 is positioned and the second initial position Lb2 at which the second movable coil 18 is positioned after execution of the initialization control is positioned at the maximum thrust angle Am. Then, both the first initial position Lb1 and the second initial position Lb2 are preferably positioned at the maximum thrust angle Am.

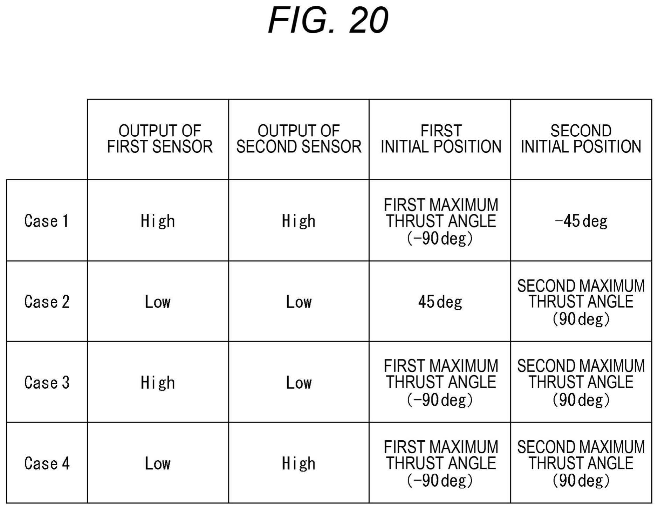

In the initialization control for the focus lenses, the first initial position Lb1 and the second initial position Lb2 are determined using table information. An example of table information used in the initialization control is illustrated in Fig. 20. Note that the table information is stored, for example, in the ROM 60 or the RAM 61 (refer to Fig. 13) of the interchangeable lens 1.

A case where both an output of the first sensor 58 and an output of the second sensor 59 are High is defined as Case 1. Furthermore, a case where both an output of the first sensor 58 and an output of the second sensor 59 are Low is defined as Case 2.

Moreover, a case where an output of the first sensor 58 is High and an output of the second sensor 59 is Low is defined as Case 3. Then, a case where an output of the first sensor 58 is Low and an output of the second sensor 59 is High is defined as Case 4.

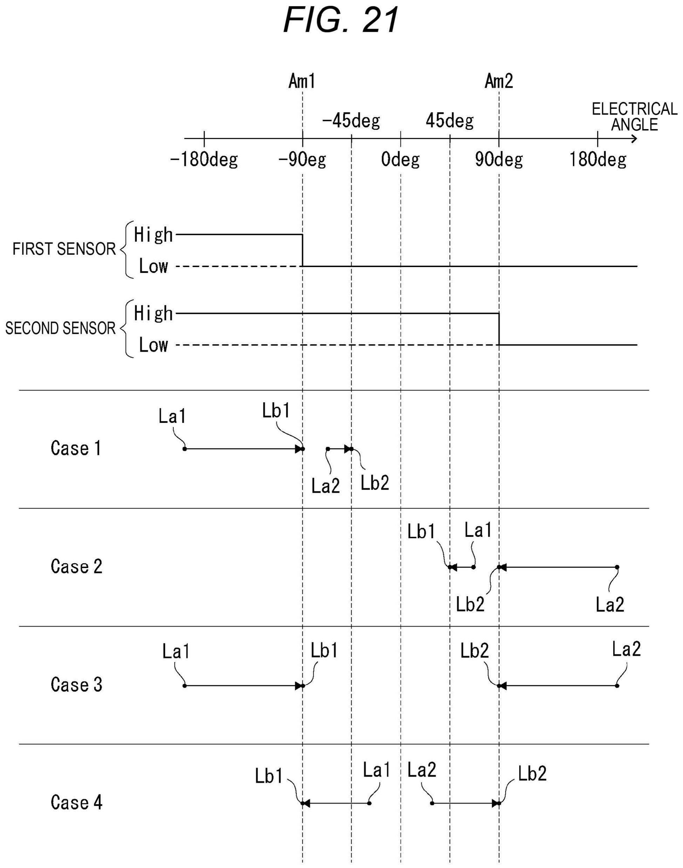

Fig. 21 illustrates an example of a relationship between pre-control positions of the movable coils and initial positions to which the movable coils are moved as a result of the initialization control.

As illustrated in Figs. 20 and 21, in Case 1, by the initialization control, the first movable coil 17 is controlled to a position of -90 deg, which is defined as the first maximum thrust angle Am1, and the second movable coil 18 is controlled to a position of -45 deg.

In Case 2, by the initialization control, the first movable coil 17 is controlled to a position of 45 deg, and the second movable coil 18 is controlled to a position of 90 deg, which is defined as the second maximum thrust angle Am2.

In Cases 3 and 4, by the initialization control, the first movable coil 17 is controlled to a position of -90 deg, which is defined as the first maximum thrust angle Am1, the first movable coil 17 is controlled to a position of 45 deg, and the second movable coil 18 is controlled to a position of 90 deg, which is defined as the second maximum thrust angle Am2.

As described above, by controlling either the first movable coil 17 or the second movable coil 18 to the position of the maximum thrust angle Am, a time required for the initialization control can be shortened.

Note that the examples illustrated in Figs. 20 and 21 are merely examples. Depending on widths of the first movable coil 17 and the second movable coil 18 in the optical axis direction, the positions illustrated as examples may not be reachable by the initialization control in some cases.

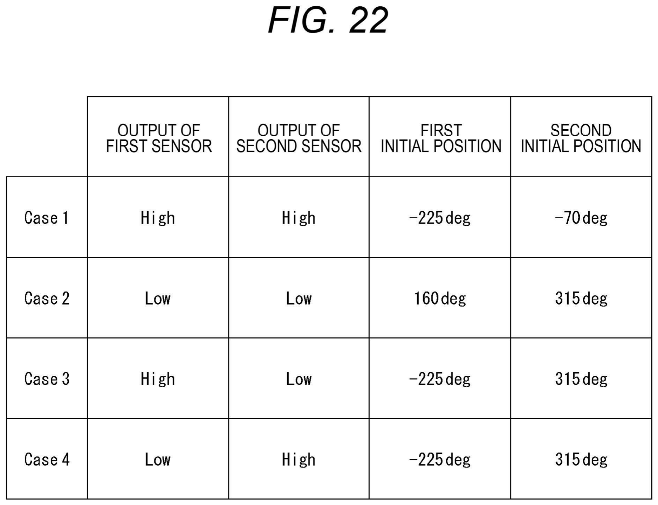

In such a case, the table information illustrated in Fig. 20 is only required to be determined according to the widths of the movable coils in the optical axis direction. In particular, in Cases 1 and 2, a difference between the first initial position Lb1 and the second initial position Lb2 is only 45 deg in electrical angle, and in such a case, as illustrated in Fig. 22, the difference between the first initial position Lb1 and the second initial position Lb2 may be made larger in electrical angle (155 deg in the example of Fig. 22), as in Cases 1 and 2.

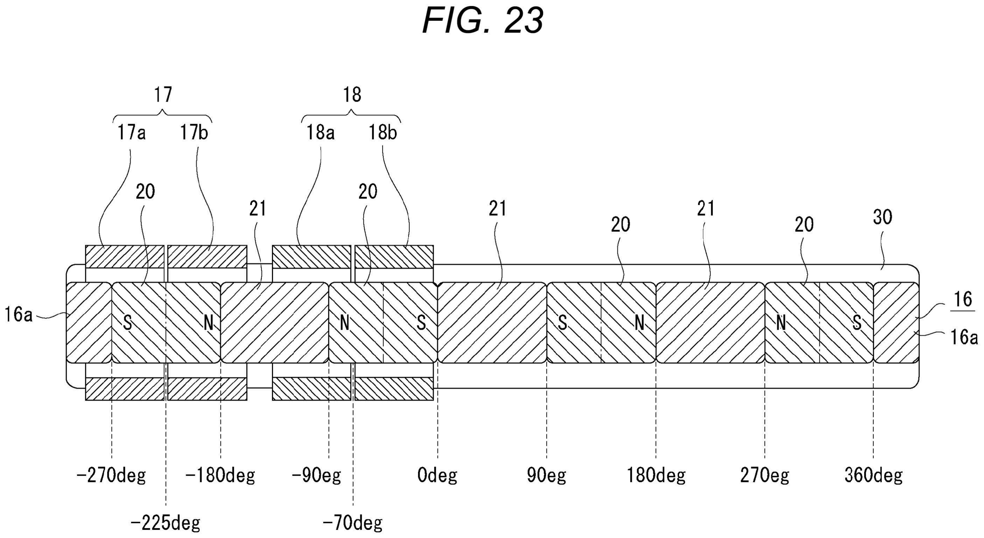

Fig. 23 illustrates positions of the first movable coil 17 and the second movable coil 18 after the initialization control in Case 1.

Note that it is desirable that the second initial position Lb2 in Case 1 is set such that a distance from a position in a case where the second movable coil 18 is moved maximally toward the subject side (when the second movable coil 18 is brought closest to the first movable coil 17) is less than 180 deg in electrical angle.

Therefore, in the initialization control, the second movable coil 18 is properly moved to the second initial position Lb2, and collision with the first movable coil 17 can be avoided.

That is, there may be two or more positions at which the electrical angles are the same (for example, a position of -70 deg) as long as the fixed rod 16 is long, but by setting the second initial position Lb2 under the above-described conditions, the second movable coil 18 can be controlled to an intended position.

Similarly, it is desirable that the first initial position Lb1 in Case 2 is set such that a distance from a position in a case where the first movable coil 17 is moved maximally toward the image side is less than 180 deg in electrical angle.

Therefore, in the initialization control, the first movable coil 17 is properly moved to the first initial position Lb1, and collision with the second movable coil 18 can be avoided.

That is, there may be two or more positions at which the electrical angles are the same (for example, a position of 160 deg) as long as the fixed rod 16 is long, but by setting the first initial position Lb1 under the above-described conditions, the first movable coil 17 can be controlled to an intended position.

### <6. Processing Flow of Initialization Control>

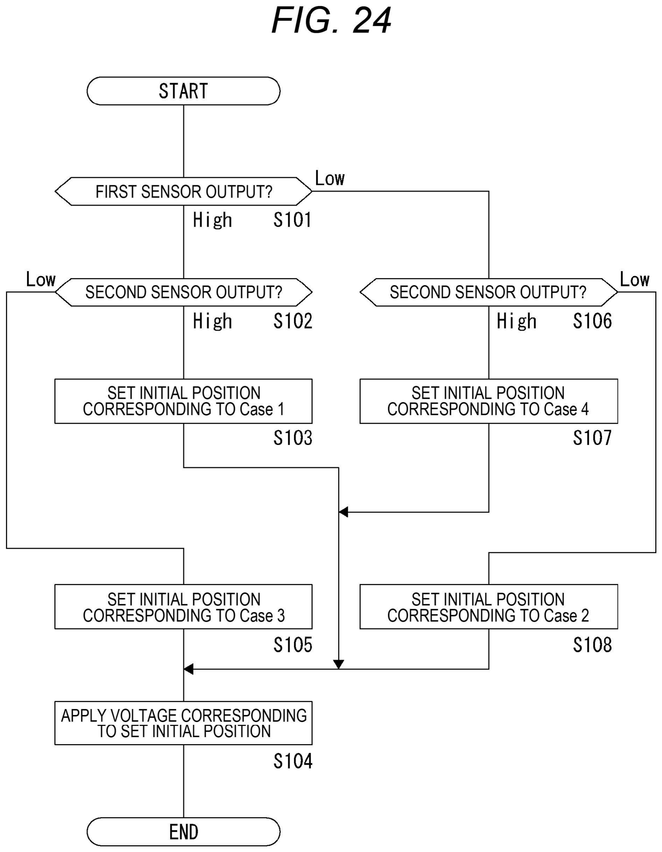

Fig. 24 illustrates a flowchart of the initialization control executed by the lens control unit 57 of the interchangeable lens 1.

In step S101, the lens control unit 57 performs branch processing according to an output of the first sensor 58. Specifically, in a case where the output of the first sensor 58 is High, the lens control unit 57 proceeds to step S102, and in a case where the output is Low, the lens control unit 57 proceeds to step S106.

In step S102, the lens control unit 57 performs branch processing according to an output of the second sensor 59. Specifically, in a case where the output of the second sensor 59 is High, the lens control unit 57 proceeds to step S103, and in a case where the output is Low, the lens control unit 57 proceeds to step S105.

In a case where the processing proceeds to step S103, that is, in a case where the outputs of both the first sensor 58 and the second sensor 59 are High, the lens control unit 57 determines that the case corresponds to Case 1, and sets the first initial position Lb1 and the second initial position Lb2 corresponding to Case 1.

On the other hand, in a case where the processing proceeds to step S105, that is, in a case where the output of the first sensor 58 is High and the output of the second sensor 59 is Low, the lens control unit 57 determines that the case corresponds to Case 3, and sets the first initial position Lb1 and the second initial position Lb2 corresponding to Case 3.

After completing processing of step S103 or step S105, the lens control unit 57 proceeds to step S104, and applies voltages corresponding to the set initial positions, that is, voltages corresponding to the initial positions in the stop excitation pattern Pt1 illustrated in Fig. 17, to the first movable coil 17 and the second movable coil 18, respectively. Therefore, the first movable coil 17 and the second movable coil 18, and consequently the first lens group 4B and the second lens group 4C, can be moved as set.

On the other hand, in a case where it is determined in the branch processing of step S101 that the output of the first sensor 58 is Low, the lens control unit 57 proceeds to step S106 and performs branch processing according to the output of the second sensor 59. Specifically, in a case where the output of the second sensor 59 is High, the lens control unit 57 proceeds to step S107, and in a case where the output is Low, the lens control unit 57 proceeds to step S108.

In a case where the processing proceeds to step S107, that is, in a case where the output of the first sensor 58 is Low and the output of the second sensor 59 is High, the lens control unit 57 determines that the case corresponds to Case 4, and sets the first initial position Lb1 and the second initial position Lb2 corresponding to Case 4.

On the other hand, in a case where the processing proceeds to step S108, that is, in a case where the outputs of both the first sensor 58 and the second sensor 59 are Low, the lens control unit 57 determines that the case corresponds to Case 2, and sets the first initial position Lb1 and the second initial position Lb2 corresponding to Case 3.

After completing processing of step S103 or step S105, the lens control unit 57 proceeds to step S104, and applies voltages corresponding to the setting to the first movable coil 17 and the second movable coil 18, respectively.

### <7. Summary>

As described above, the interchangeable lens 1 as the lens device includes the first lens group 4B including one or more lenses; the first holding frame 22 that holds the first lens group 4B; the second lens group 4C that includes one or more lenses and is positioned closer to the image side than the first lens group 4B; the second holding frame 26 that holds the second lens group 4C; the fixed rod 16 in which two or more magnets 20 and one or more inner yokes 21 are alternately coupled; the movable coil (first movable coil 17, second movable coil 18) through which the fixed rod 16 is inserted and is movable with respect to the fixed rod 16 in a coupling direction (optical axis direction) of the magnets 20 and the inner yokes 21; and the drive control unit (lens control unit 57) that performs initialization control of moving the movable coil to the initial position (first initial position Lb1, second initial position Lb2), and the movable coil includes the first movable coil 17 that moves the first holding frame 22 and the second movable coil 18 that moves the second holding frame 26.

Then, the drive control unit (lens control unit 57) moves the first movable coil 17 to the first initial position Lb1 and the second movable coil 18 to the second initial position Lb2 by simultaneously moving the first movable coil 17 and the second movable coil 18 for a certain period of time in initialization control, and the first initial position Lb1 and the second initial position Lb2 are determined on the basis of the first pre-control position La1, which is a position of the first movable coil 17 relative to the fixed rod 16 before execution of the initialization control, and the second pre-control position La2, which is a position of the second movable coil 18 relative to the fixed rod 16 before execution of the initialization control.

Since the first initial position Lb1 and the second initial position Lb2 are determined according to the first pre-control position La1 and the second pre-control position La2, the initialization control can be performed without considering collision by determining the first initial position Lb1 and the second initial position Lb2 such that collision between the first movable coil 17 and the second movable coil 18 does not occur. That is, it is possible to simultaneously drive the first movable coil 17 and the second movable coil 18 for at least a certain period of time in the initialization control.

Accordingly, it is not necessary to move the first movable coil 17 and the second movable coil 18 to the initial positions in a time-division manner, and the time required for the initialization control can be shortened.

By shortening the time for the initialization control of the lens when a camera device is activated, it is possible to shorten the time for the user to wait until an imaging enabling state is reached, and improve the usability.

Furthermore, in a case where the camera device is urgently activated upon encountering a shutter chance, by shortening the time until a release operation becomes possible, it is possible to make it difficult to miss the shutter chance.

As described with reference to Figs. 20 to 22, the drive control unit (lens control unit 57) in the interchangeable lens 1 may perform the initialization control using table information indicating a relationship among the first initial position Lb1, the second initial position Lb2, the first pre-control position La1, and the second pre-control position La2.

Therefore, it becomes possible to acquire the first initial position Lb1 and the second initial position Lb2 without using complicated calculation. Accordingly, it is possible to reduce a processing load of the lens device (interchangeable lens 1) and to reduce power consumption.

As described with reference to Fig. 13 and the like, the interchangeable lens 1 may be provided with the storage unit (ROM 6 or RAM 61) in which table information is stored.

Therefore, the lens device (interchangeable lens 1) does not need to obtain information regarding the first initial position Lb1 and the second initial position Lb2 from the outside. That is, since there is no communication time with an external device, smooth initialization control can be performed.

As described with reference to Figs. 2 to 8 and the like, in the interchangeable lens 1, any one of the first lens group 4B and the second lens group 4C is the floating lens group.

The floating lens group is moved simultaneously with the paired lens group, so that variation in aberration can be suppressed. In the lens device (interchangeable lens 1) having such a configuration, it is necessary to move two or more lens groups to their respective initial positions, but by applying this configuration, it is possible to shorten the time for the initialization control of moving each lens group employing the floating mechanism to the initial position.

As described with reference to Figs. 20 to 22 and the like, in the interchangeable lens 1, an electrical angle at which thrust of the movable coil becomes maximum in the excitation pattern signal used to drive the movable coil (first movable coil 17, second movable coil 18) may be defined as the maximum thrust angle Am, and the first initial position Lb1 and/or the second initial position Lb2 may be set to a position corresponding to the maximum thrust angle Am.

Therefore, a moving speed of at least one of the movable coils is improved, and the time required for the initialization control can be shortened.

Note that the position corresponding to the maximum thrust angle Am is not necessarily limited to the position where the electrical angle is set to -90 deg or the position where the electrical angle is set to 90 deg as described above.

For example, the angle may be appropriately determined according to the width of the movable coil in the optical axis direction, and may be set such that the position comes as close as possible to the position where the electrical angle is set to -90 deg or the position where the electrical angle is set to 90 deg in consideration of the width in the optical axis direction (refer to Fig. 22).

As described with reference to Figs. 22 to 22, in the interchangeable lens 1, the maximum thrust angle Am may include two maximum thrust angles of the first maximum thrust angle Am1 on the subject side and the second maximum thrust angle Am2 on the image side in a movable range of the movable coil (first movable coil 17, second movable coil 18), and in a case where any one of the first pre-control position La1 and the second pre-control position La2 is positioned between a position corresponding to the first maximum thrust angle Am1 and a position corresponding to the second maximum thrust angle Am2, the first initial position Lb1 is set to a position corresponding to the first maximum thrust angle Am1, and the second initial position Lb2 is set to a position corresponding to the second maximum thrust angle Am2.

Therefore, under predetermined conditions, it is possible to simultaneously move the first movable coil 17 and the second movable coil 18 to their respective initial positions without considering collision between the first movable coil 17 and the second movable coil 18, and high moving speeds are achieved for both movable coils, so that the time required for the initialization control can be further shortened.

As described with reference to Figs. 22 to 22, in the interchangeable lens 1, the maximum thrust angle Am includes two maximum thrust angles of the first maximum thrust angle Am1 on the subject side and the second maximum thrust angle Am2 on the image side in a movable range of the movable coil (first movable coil 17, second movable coil 18), and in a case where the first pre-control position La1 is a position closer to the subject side than a position corresponding to the first maximum thrust angle Am1 and the second pre-control position La2 is a position closer to the subject side than a position corresponding to the second maximum thrust angle Am2 (the above-described Case 1), the first initial position Lb1 is set to a position corresponding to the first maximum thrust angle Am1, and the second initial position Lb2 is set to a position that is closer to the image side than the position corresponding to the first maximum thrust angle Am1 and at which a difference from the second pre-control position La2 is less than 180 degrees in electrical angle.

Therefore, under predetermined conditions, it is possible to simultaneously move the first movable coil 17 and the second movable coil 18 to their respective initial positions without considering collision between the first movable coil 17 and the second movable coil 18, and a high moving speed is achieved for any one of the movable coils, so that the time required for the initialization control can be further shortened.

As described with reference to Figs. 22 to 22, in the interchangeable lens 1, the maximum thrust angle Am includes two maximum thrust angles of the first maximum thrust angle Am1 on the subject side and the second maximum thrust angle Am2 on the image side in a movable range of the movable coil (first movable coil 17, second movable coil 18), and in a case where the first pre-control position La1 is a position closer to the image side than a position corresponding to the first maximum thrust angle Am1 and the second pre-control position La2 is a position closer to the image side than a position corresponding to the second maximum thrust angle Am2 (the above-described Case 2), the second initial position Lb2 is set to a position corresponding to the second maximum thrust angle Am2, and the first initial position Lb1 is set to a position that is closer to the subject side than the position corresponding to the second maximum thrust angle Am2 and at which a difference from the first pre-control position La1 is less than 180 degrees in electrical angle.

Therefore, under predetermined conditions, it is possible to simultaneously move the first movable coil 17 and the second movable coil 18 to their respective initial positions without considering collision between the first movable coil 17 and the second movable coil 18, and a high moving speed is achieved for any one of the movable coils, so that the time required for the initialization control can be further shortened.

As described with reference to Fig. 13 and the like, the interchangeable lens 1 may further include the first sensor 58 that detects a position of the first pre-control position La1; and the second sensor 59 that detects a position of the second pre-control position La2.

Therefore, it is possible to appropriately detect the first pre-control position La1 and the second pre-control position La2, and it is possible to suitably determine the first initial position Lb1 and the second initial position Lb2.

Accordingly, it is possible to avoid collision between the first movable coil 17 and the second movable coil 18 in the initialization control.

As described with reference to Fig. 16 and the like, in the interchangeable lens 1, the electrical angle at which thrust of the movable coil becomes maximum in the excitation pattern signal used to drive the movable coil (first movable coil 17, second movable coil 18) is defined as the maximum thrust angle Am, the maximum thrust angle Am includes two maximum thrust angles of the first maximum thrust angle Am1 on the subject side and the second maximum thrust angle Am2 on the image side in a movable range of the movable coil, and the first sensor 58 outputs information indicating whether or not the first pre-control position La1 is on the subject side with respect to a position corresponding to the first maximum thrust angle Am1.

For example, in a case where information indicating that the first movable coil 17 is positioned closer to the image side than the first maximum thrust angle Am1 is output from the first sensor 58, in the initialization control, the first movable coil 17 can be moved to a position corresponding to the first maximum thrust angle Am1 without considering collision with the second movable coil 18, that is, can be moved to the subject side.

Accordingly, it is possible to simultaneously move the first movable coil 17 and the second movable coil 18, and the time required for the initialization control can be shortened.

As described with reference to Fig. 16 and the like, in the interchangeable lens 1, the electrical angle at which thrust of the movable coil becomes maximum in the excitation pattern signal used to drive the movable coil (first movable coil 17, second movable coil 18) is defined as the maximum thrust angle Am, the maximum thrust angle Am includes two maximum thrust angles of the first maximum thrust angle Am1 on the subject side and the second maximum thrust angle Am2 on the image side in a movable range of the movable coil, and the second sensor 59 outputs information indicating whether or not the second pre-control position La2 is on the subject side with respect to a position corresponding to the second maximum thrust angle Am2.

For example, in a case where information indicating that the second movable coil 18 is positioned closer to the subject side than the second maximum thrust angle Am2 is output from the second sensor 59, in the initialization control, the second movable coil 18 can be moved to a position corresponding to the second maximum thrust angle Am2 without considering collision with the first movable coil 17, that is, can be moved to the image side.

Accordingly, it is possible to simultaneously move the first movable coil 17 and the second movable coil 18, and the time required for the initialization control can be shortened.

As described with reference to Fig. 16 and the like, in the interchangeable lens 1, both the first sensor 58 and the second sensor 59 may be photoelectric sensors.

Therefore, since the first sensor 58 and the second sensor 59 can be implemented with a simple configuration, the first pre-control position La1 and the second pre-control position La2 can be specified without causing complication of the control.

A lens driving method to be executed by a lens device (interchangeable lens 1) in the present technology is a lens driving method including initialization control of, with respect to the fixed rod 16 in which two or more magnets 20 and one or more inner yokes 21 are alternately coupled, respectively moving the first holding frame 22 that holds the first lens group 4B including one or more lenses and the second holding frame 26 that holds the second lens group 4C including one or more lenses to initial positions in the coupling direction of the magnets 20 and the inner yokes 21, in which the initialization control includes processing of moving the first movable coil 17, through which the fixed rod 16 is inserted and which moves the first holding frame 22 in the coupling direction with respect to the fixed rod 16, to the first initial position Lb1 and moving the second movable coil 18, through which the fixed rod 16 is inserted and which moves the second holding frame 26 in the coupling direction with respect to the fixed rod 16, to the second initial position Lb2, by simultaneously moving the first movable coil 17 and the second movable coil 18 for a certain period of time, and the first initial position Lb1 and the second initial position Lb2 are determined on the basis of the first pre-control position La1, which is a position of the first movable coil 17 relative to the fixed rod 16 before execution of the initialization control, and the second pre-control position La2, which is a position of the second movable coil 18 relative to the fixed rod 16 before execution of the initialization control.

The above-described various functions and effects can be obtained by such a lens driving method.

Note that a program for implementing the above-described processing in the interchangeable lens 1 as the lens device can be recorded in advance in an HDD as a recording medium built in equipment such as a computer device, or in a ROM and the like within a microcomputer having a CPU.

Alternatively, the program may be temporarily or permanently stored (recorded) in a removable recording medium such as a flexible disk, a Compact Disc Read Only Memory (CD-ROM), a Magneto Optical (MO) disk, a Digital Versatile Disc (DVD), a Blu-ray disc (registered trademark), a magnetic disk, a semiconductor memory, or a memory card. Such a removable recording medium can be provided as so-called package software.

Furthermore, such a program may be installed from the removable recording medium into a personal computer and the like, or may be downloaded from a download site through a network such as a Local Area Network (LAN) or the Internet.

Note that the effects described in the present specification are merely examples and are not limited, and other effects may be provided.

Furthermore, the above-described examples may be combined in any way, and the above-described various functions and effects may be obtained even in a case where various combinations are used.

### <8. The Present Technology>

The present technology can also adopt the following configurations.
(1) A lens device including:
   a first lens group including one or more lenses;
   a first holding frame that holds the first lens group;
   a second lens group that includes one or more lenses and is positioned closer to an image side than the first lens group;
   a second holding frame that holds the second lens group;
   a fixed rod in which two or more magnets and one or more inner yokes are alternately coupled;
   a movable coil through which the fixed rod is inserted and is movable with respect to the fixed rod in a coupling direction of the magnets and the inner yokes; and
   a drive control unit that performs initialization control of moving the movable coil to an initial position,
   in which the movable coil includes a first movable coil that moves the first holding frame, and a second movable coil that moves the second holding frame,
   the drive control unit moves the first movable coil to a first initial position and the second movable coil to a second initial position by simultaneously moving the first movable coil and the second movable coil for a certain period of time in the initialization control, and
   the first initial position and the second initial position are determined on the basis of a first pre-control position, which is a position of the first movable coil relative to the fixed rod before execution of the initialization control, and a second pre-control position, which is a position of the second movable coil relative to the fixed rod before execution of the initialization control.
(2) The lens device according to (1),
   in which the drive control unit performs the initialization control using table information indicating a relationship among the first initial position, the second initial position, the first pre-control position, and the second pre-control position.
(3) The lens device according to (2), further including:
   a storage unit that stores the table information.
(4) The lens device according to any one of (1) to (3),
   in which any one of the first lens group and the second lens group is a floating lens group.
(5) The lens device according to any one of (1) to (4),
   in which an electrical angle at which thrust of the movable coil becomes maximum in an excitation pattern signal used to drive the movable coil is defined as a maximum thrust angle, and
   the first initial position and/or the second initial position is set to a position corresponding to the maximum thrust angle.
(6) The lens device according to (5),
   in which the maximum thrust angle includes two maximum thrust angles of a first maximum thrust angle on the subject side and a second maximum thrust angle on the image side in a movable range of the movable coil, and
   in a case where any one of the first pre-control position and the second pre-control position is positioned between a position corresponding to the first maximum thrust angle and a position corresponding to the second maximum thrust angle,
   the first initial position is set to a position corresponding to the first maximum thrust angle, and
   the second initial position is set to a position corresponding to the second maximum thrust angle.
(7) The lens device according to (5),
   in which the maximum thrust angle includes two maximum thrust angles of a first maximum thrust angle on the subject side and a second maximum thrust angle on the image side in a movable range of the movable coil, and
   in a case where the first pre-control position is a position closer to the subject side than a position corresponding to the first maximum thrust angle and the second pre-control position is a position closer to the subject side than a position corresponding to the second maximum thrust angle,
   the first initial position is set to a position corresponding to the first maximum thrust angle, and
   the second initial position is set to a position that is closer to the image side than the position corresponding to the first maximum thrust angle and at which a difference from the second pre-control position is less than 180 degrees in electrical angle.
(8) The lens device according to (5) or (6),
   in which the maximum thrust angle includes two maximum thrust angles of a first maximum thrust angle on the subject side and a second maximum thrust angle on the image side in a movable range of the movable coil, and
   in a case where the first pre-control position is a position closer to the image side than a position corresponding to the first maximum thrust angle and the second pre-control position is a position closer to the image side than a position corresponding to the second maximum thrust angle,
   the second initial position is set to a position corresponding to the second maximum thrust angle, and
   the first initial position is set to a position that is closer to the subject side than the position corresponding to the second maximum thrust angle and at which a difference from the first pre-control position is less than 180 degrees in electrical angle.
(9) The lens device according to any one of (1) to (8), further including:
   a first sensor that detects a position of the first pre-control position; and
   a second sensor that detects a position of the second pre-control position.
(10) The lens device according to (9),
   in which an electrical angle at which thrust of the movable coil becomes maximum in an excitation pattern signal used to drive the movable coil is defined as a maximum thrust angle,
   the maximum thrust angle includes two maximum thrust angles of a first maximum thrust angle on the subject side and a second maximum thrust angle on the image side in a movable range of the movable coil, and
   the first sensor outputs information indicating whether or not the first pre-control position is on the subject side with respect to a position corresponding to the first maximum thrust angle.
(11) The lens device according to (9) or (10),
   in which an electrical angle at which thrust of the movable coil becomes maximum in an excitation pattern signal used to drive the movable coil is defined as a maximum thrust angle,
   the maximum thrust angle includes two maximum thrust angles of a first maximum thrust angle on the subject side and a second maximum thrust angle on the image side in a movable range of the movable coil, and
   the second sensor outputs information indicating whether or not the second pre-control position is on the subject side with respect to a position corresponding to the second maximum thrust angle.
(12) The lens device according to any one of (9) to (11),
   in which both the first sensor and the second sensor are photoelectric sensors.
(13) A lens driving method including:
   causing a lens device to execute initialization control of, with respect to a fixed rod in which two or more magnets and one or more inner yokes are alternately coupled, respectively moving a first holding frame that holds a first lens group including one or more lenses and a second holding frame that holds a second lens group including one or more lenses to initial positions in a coupling direction of the magnets and the inner yokes,
   in which the initialization control includes
   processing of moving a first movable coil, through which the fixed rod is inserted and which moves the first holding frame in the coupling direction with respect to the fixed rod, to a first initial position and moving a second movable coil, through which the fixed rod is inserted and which moves the second holding frame in the coupling direction with respect to the fixed rod, to a second initial position, by simultaneously moving the first movable coil and the second movable coil for a certain period of time, and
   the first initial position and the second initial position are determined on the basis of a first pre-control position, which is a position of the first movable coil relative to the fixed rod before execution of the initialization control, and a second pre-control position, which is a position of the second movable coil relative to the fixed rod before execution of the initialization control.

### REFERENCE SIGNS LIST

- 1: Interchangeable lens (lens device)
- 4B: First lens group (floating lens group)
- 4C: Second lens group (floating lens group)
- 16: Fixed rod
- 17: First movable coil
- 18: Second movable coil
- 20: Magnet
- 21: Inner yoke
- 22: First holding frame
- 26: Second holding frame
- 57: Lens control unit (drive control unit)
- 58: First sensor (photoelectric sensor)
- 59: Second sensor (photoelectric sensor)
- 60: ROM (storage unit)
- 61: RAM (storage unit)
- La1: First pre-control position
- La2: Second pre-control position
- Lb1: First initial position
- Lb2: Second initial position
- Am: Maximum thrust angle
- Am1: First maximum thrust angle
- Am2: Second maximum thrust angle

## Claims

1. A lens device comprising:
a first lens group including one or more lenses;
a first holding frame that holds the first lens group;
a second lens group that includes one or more lenses and is positioned closer to an image side than the first lens group;
a second holding frame that holds the second lens group;
a fixed rod in which two or more magnets and one or more inner yokes are alternately coupled;
a movable coil through which the fixed rod is inserted and is movable with respect to the fixed rod in a coupling direction of the magnets and the inner yokes; and
a drive control unit that performs initialization control of moving the movable coil to an initial position,
wherein the movable coil includes a first movable coil that moves the first holding frame, and a second movable coil that moves the second holding frame,
the drive control unit moves the first movable coil to a first initial position and the second movable coil to a second initial position by simultaneously moving the first movable coil and the second movable coil for a certain period of time in the initialization control, and
the first initial position and the second initial position are determined on a basis of a first pre-control position, which is a position of the first movable coil relative to the fixed rod before execution of the initialization control, and a second pre-control position, which is a position of the second movable coil relative to the fixed rod before execution of the initialization control.

2. The lens device according to claim 1,
wherein the drive control unit performs the initialization control using table information indicating a relationship among the first initial position, the second initial position, the first pre-control position, and the second pre-control position.

3. The lens device according to claim 2, further comprising:
a storage unit that stores the table information.

4. The lens device according to claim 1,
wherein any one of the first lens group and the second lens group is a floating lens group.

5. The lens device according to claim 1,
wherein an electrical angle at which thrust of the movable coil becomes maximum in an excitation pattern signal used to drive the movable coil is defined as a maximum thrust angle, and
the first initial position and/or the second initial position is set to a position corresponding to the maximum thrust angle.

6. The lens device according to claim 5,
wherein the maximum thrust angle includes two maximum thrust angles of a first maximum thrust angle on the subject side and a second maximum thrust angle on the image side in a movable range of the movable coil, and
in a case where any one of the first pre-control position and the second pre-control position is positioned between a position corresponding to the first maximum thrust angle and a position corresponding to the second maximum thrust angle,
the first initial position is set to a position corresponding to the first maximum thrust angle, and
the second initial position is set to a position corresponding to the second maximum thrust angle.

7. The lens device according to claim 5,
wherein the maximum thrust angle includes two maximum thrust angles of a first maximum thrust angle on the subject side and a second maximum thrust angle on the image side in a movable range of the movable coil, and
in a case where the first pre-control position is a position closer to the subject side than a position corresponding to the first maximum thrust angle and the second pre-control position is a position closer to the subject side than a position corresponding to the second maximum thrust angle,
the first initial position is set to a position corresponding to the first maximum thrust angle, and
the second initial position is set to a position that is closer to the image side than the position corresponding to the first maximum thrust angle and at which a difference from the second pre-control position is less than 180 degrees in electrical angle.

8. The lens device according to claim 5,
wherein the maximum thrust angle includes two maximum thrust angles of a first maximum thrust angle on the subject side and a second maximum thrust angle on the image side in a movable range of the movable coil, and
in a case where the first pre-control position is a position closer to the image side than a position corresponding to the first maximum thrust angle and the second pre-control position is a position closer to the image side than a position corresponding to the second maximum thrust angle,
the second initial position is set to a position corresponding to the second maximum thrust angle, and
the first initial position is set to a position that is closer to the subject side than the position corresponding to the second maximum thrust angle and at which a difference from the first pre-control position is less than 180 degrees in electrical angle.

9. The lens device according to claim 1, further comprising:
a first sensor that detects a position of the first pre-control position; and
a second sensor that detects a position of the second pre-control position.

10. The lens device according to claim 9,
wherein an electrical angle at which thrust of the movable coil becomes maximum in an excitation pattern signal used to drive the movable coil is defined as a maximum thrust angle,
the maximum thrust angle includes two maximum thrust angles of a first maximum thrust angle on the subject side and a second maximum thrust angle on the image side in a movable range of the movable coil, and
the first sensor outputs information indicating whether or not the first pre-control position is on the subject side with respect to a position corresponding to the first maximum thrust angle.

11. The lens device according to claim 9,
wherein an electrical angle at which thrust of the movable coil becomes maximum in an excitation pattern signal used to drive the movable coil is defined as a maximum thrust angle,
the maximum thrust angle includes two maximum thrust angles of a first maximum thrust angle on the subject side and a second maximum thrust angle on the image side in a movable range of the movable coil, and
the second sensor outputs information indicating whether or not the second pre-control position is on the subject side with respect to a position corresponding to the second maximum thrust angle.

12. The lens device according to claim 9,
wherein both the first sensor and the second sensor are photoelectric sensors.

13. A lens driving method comprising:
causing a lens device to execute initialization control of, with respect to a fixed rod in which two or more magnets and one or more inner yokes are alternately coupled, respectively moving a first holding frame that holds a first lens group including one or more lenses and a second holding frame that holds a second lens group including one or more lenses to initial positions in a coupling direction of the magnets and the inner yokes,
wherein the initialization control includes
processing of moving a first movable coil, through which the fixed rod is inserted and which moves the first holding frame in the coupling direction with respect to the fixed rod, to a first initial position and moving a second movable coil, through which the fixed rod is inserted and which moves the second holding frame in the coupling direction with respect to the fixed rod, to a second initial position, by simultaneously moving the first movable coil and the second movable coil for a certain period of time, and
the first initial position and the second initial position are determined on a basis of a first pre-control position, which is a position of the first movable coil relative to the fixed rod before execution of the initialization control, and a second pre-control position, which is a position of the second movable coil relative to the fixed rod before execution of the initialization control.
